# EUROPEAN PATENT SPECIFICATION

(11) **EP 2 019 509 B1**
(45) Date of publication and mention of the grant of the patent: **18.04.2012**
(21) Application number: 07113227.8
(22) Date of filing: 26.07.2007
(51) Int. Cl.: H04L 5/00, H04L 5/14, H04L 5/02

(54) **Method and apparatus for controlling uplink transmissions in OFDMA systems**
Vorrichtung und Verfahren zur Steuerung von Uplink-Übertragungen in OFDMA-Systemen
Procédé et appareil pour le contrôle de transmissions de liaison montante dans des systèmes OFDMA

(43) Date of publication of application: 28.01.2009
(73) Proprietor: Telefonaktiebolaget LM Ericsson (publ), 164 83 Stockholm (SE)
(72) Inventor: Haartsen, Jacobus, NL-7772 BG, HARDENBERG (NL)
(74) Representative: Åkerman, Mårten Lennart

(56) References cited:
- EP-A- 0 555 595
- US-B1- 6 480 475
- HEATH ET AL.: "Coordinated training and transmission for improved interference cancellation in a cellular network" ASILOMAR CONFERENCE ON SIGNALS, SYSTEMS AND COMPUTERSOCT. 29 - NOV. 1, 2000, vol. 2, 29 October 2000 (2000-10-29), pages 939-945, XP010535142 PISCATAWAY, US
- NOGUEROLES ET AL.: "Improved performance of a random OFDMA mobile communication system" IEEE VEHICULAR TECHNOLOGY CONFERENCE, vol. 3, 18 May 1998 (1998-05-18), pages 2502-2506, XP010288120 New York, US

## Description

### Technical Field

The present invention relates to the field of controlling uplink transmissions in communication systems. More particularly, it relates to controlling uplink transmissions of data bursts in orthogonal frequency division multiple access systems.

### Background

In modem cellular radio systems, the radio network generally has strict control over the behavior of the terminals present in the system. Uplink transmission parameters such as frequency, timing, and power may be controlled via downlink control messages from the base station (BS, also termed Node B) to the terminal (also termed user equipment, UE).

The uplink timing of packets transmitted from different terminals is of particular importance. Many digital wireless systems make use of time slots or frames. Such systems have a time division multiple access (TDMA) component, although they may also have, for example, a frequency division multiple access (FDMA) component and/or a code division multiple access (CDMA) component. Consecutive frames may be allocated to different terminals. A strict uplink timing control is required in order to avoid overlap between consecutive uplink packets from different terminals.

In the Universal Mobile Telecommunications System for Long Term Evolution (UMTS LTE) standard, an even tighter control of the uplink timing is required since UMTS LTE is based on an orthogonal frequency division multiple access (OFDMA) technique. In OFDMA, the available time-frequency sub-space is divided into time-frequency blocks, and a terminal may be allocated one or more time-frequency blocks for transmission. The time-frequency blocks are mutually orthogonal, and the importance of strict uplink timing relates to this fact. Since the OFDMA signal is commonly constructed by use of an inverse fast Fourier transform (IFFT) and the received signal is commonly demodulated by use of a fast Fourier transform (FFT), the bursts transmitted by the different terminals have to be synchronous in time when received at the base station to avoid overlap in time (inter-symbol interference) and frequency (inter-carrier interference) and to maintain orthogonality between packets in different time-frequency blocks in both time and frequency.

In UMTS LTE, a special modulation method, pre-coded orthogonal frequency division multiplex (OFDM), may be applied in the uplink. Conventionally modulated signals (such as, for example, binary phase shift keying (BPSK) signals, quadrature phase shift keying (QPSK) signals, or 16 quadrature amplitude modulation (16-QAM) signals) are transformed to the frequency domain via small FFTs. This step is the precoding step. The resulting frequency signals are placed in the transmission spectrum and subsequently jointly mapped back to the time domain via a large IFFT. The resulting pre-coded OFDM signal has a lower Peak-to-Average Power Ratio (PAPR) than a conventional OFDM signal.

By inserting a Cyclic Prefix (CP) into each burst, the bursts retain the circular properties of conventional OFDM signals, thus allowing a receiver to process the signals in the frequency domain even in dispersive environments. This means that FFTs can be used to separate the users in the frequency domain rather than using selective filters. This requires, however, that the different users that are located at different places in the frequency domain are accurately time synchronized (i.e., within the CP length). Otherwise, inter-carrier interference (ICI) will result. Hence, in the uplink of UMTS LTE, accurate timing is required both to separate different users in subsequent time slots and to separate different users in different frequency bands.

A general problem is encountered in cellular networks with a cell radius ranging from, for example, a few kilometers to tens of kilometers. In such cases, the extra time delay over the radio path results in delayed arrival times of the packets at the base station, and packets from terminals at different distances from the base station arrive at different times. Hence, the time of propagation must be accounted for in these cases. The additional delay experienced depends on the distance between the base station and the terminal. Since the UE timing (both in uplink and downlink) is based on the downlink control signals, which are by themselves received in the terminal delayed by the same propagation delay, the aggregate timing mismatch in the uplink amounts to twice the propagation delay. The aggregate timing mismatch thus represents the round-trip delay (RTD) over the air.

Without any precautions, large guard times or guard periods would be needed between consecutive frames in order to prevent overlap at the base station receiver. The guard time would need to be at least as long as the largest round-trip delay among the terminals, which is determined by the worst-case terminal, namely the one that is at the largest distance from the base station. Applying such guard periods would result in quite a capacity loss since the guard periods cannot be used for transmissions. To exemplify, a guard time of at least 100µs is required for cell sizes up to 15 km, and a guard time of at least 200µs is required for cell sizes up to 30 km. For a sub-frame or slot length of, for example, 500µs, these numbers amount to an overhead of 20% and 40%, respectively, which is quite unacceptable.

Therefore, many wireless systems apply a timing advance (TA) technique. Timing alignment is used in all cellular systems for wide area coverage, and is a known concept in TDMA systems like, for example, Global System for Mobile communications (GSM). When a TA technique is used for timing alignment, the base station compares the timing of the received signals with its own transmission timing. From the difference between the timings, the mismatch can be determined for each terminal. Subsequently, the base station sends a control message comprising a TA value to each terminal to order the terminal transmitter to advance its transmission timing. The terminal will then advance the timing of its uplink by the TA value, meaning that the terminal commences transmission of an uplink packet earlier, such that the round-trip delay is compensated for. In the base station, the uplink timing will then be aligned with the downlink timing.

When such a technique is used, residual guard times are only required to take into account clock drifts and inaccuracies in the TA estimation and timing control. When the distance of a terminal changes, the TA value changes as well. Thus TA updates need to be sent repeatedly, for example periodically. To reduce the overhead generated when a TA control message needs to be sent frequently, the residual guard times may be designed to cover small terminal movements.

For example, EP 0,555,595 A1 discloses a method where the starting time of uplink frames is chosen, in all mobile terminals, such that, in the base station, the start- ing time of these frames is separated from the ending time of downlink frames by a period less than the double propagation time (i.e. less than the round-trip time).

In UMTS LTE frequency division multiplex (FDD) systems, uplink and downlink signals use different frequency bands, which are sufficiently spaced to allow simultaneous transmission and reception. This is called full-duplex operation. A duplexer filter near the terminal antenna can isolate the transmit frequencies from the receive frequencies. Thus, a transmit filter in the duplexer may attenuate the transmitted signals so that the residual emissions in the receive band are sufficiently below the received signal level.

As explained above, timing advance of a packet transmitted from a terminal may be needed to account for the round-trip delay and the timing requirements at the base station and to get all uplink transmissions aligned when received at the base station.

Full-duplex operation provides a high throughput performance since the channels can be used continuously. However, in order to achieve low power and low cost in terminals that do not have demanding applications, for example terminals only targeting voice users, half-duplex operation may be more attractive. In half-duplex operation, the terminal does not have to be able to transmit and receive simultaneously. Hence, expensive and-power demanding duplex filters may be omitted or temporarily by-passed, and support circuitry, such as synthesizers, may be shared between the transmission and reception chains. A terminal may be a full-duplex terminal, a half-duplex terminal, or it may be able to switch between full-duplex and half-duplex operation.

In UMTS LTE FDD systems, both full-duplex and half-duplex operation may be supported. Indeed, depending on the distance and on the environmental conditions, switching between half-duplex and full-duplex operation at a terminal may be beneficial and provides a form of link adaptation.

Using the timing advance technique to ensure time alignment of packets received at the base station poses a problem when terminals in half-duplex operation are present. This is because the terminals in half-duplex operation cannot transmit and receive simultaneously, and the timing advance causes overlap in time of the reception and transmission at the terminal. The uplink transmission must, due to the timing advance, start before the downlink reception has ended. This gives rise to self-interference, and the transmitter signals will block reception of the remaining part of the downlink packet at the terminal.

Therefore, a different timing alignment method is required in FDD systems that support both half-duplex and full-duplex operation.

In FDD schemes, uplink and downlink transmissions make use of different frequency bands. Alternatively, Time Division Duplex (TDD) can be used. In TDD schemes, uplink and downlink transmissions make use of the same frequency band (often using the same radio frequency carrier) but happen at different points in time, that is, reception and transmission are alternated.

For example US 6,480, 475 B1 discloses time division duplexing synchronized such that periodic synchronized upstream and downstream communication periods do not overlap with one another. Quiet periods, during which no data is transmitted in either direction, separate the upstream and downstream communication periods.

In simple TDD systems, like DECT, timing alignment is not critical. The round-trip delay is very small due to the small coverage area, and a guard time between the slots can prevent subsequent slots to overlap, even when a small timing misalignment exists. However, in wide area cell networks such as UMTS LTE, where a pre-coded OFDM modulation is used in the uplink, terminals that send simultaneously but use different sub-carriers will only remain orthogonal when they are precisely time aligned. A CP is used to allow frequency domain processing. However, the CP is needed to compensate for the delay spread in the channel. Therefore, only a fraction of the CP can be used as guard period for timing misalignment. For UMTS LTE, the CP is in the order of 5 µs. The uplink timing must therefore be accurate within approximately 1 µs.

One serious problem in more complex TDD systems is the timing advance needed in wide area cellular networks in order to compensate for the radio propagation round-trip delay. As explained above, timing alignment is required to avoid interference in the time domain between terminals using adjacent time slots, but also to avoid interference in the frequency domain between terminals using adjacent sub-carrier sets in a pre-coded OFDM modulation system. Just as in the case of half-duplex FDD terminals, a TDD terminal cannot receive and transmit simultaneously. The terminal has to await the end of the downlink packet before it can start sending its uplink packet. Any timing advance would lead to an unacceptable interference from the terminal's transmitter into its own receiver.

Therefore, a different timing alignment method is also required in TDD systems.

Thus, there is a need for methods and devices for controlling uplink transmissions. The uplink transmissions should be controlled such that the uplink packets are time aligned when received at the base station. The uplink transmissions should also be controlled such that no self-interference is induced in neither TDD terminals nor FDD terminals in half-duplex operation.

### Summary

It is an object of the invention to obviate at least some of the above disadvantages and to provide improved methods and apparatuses for controlling uplink transmissions of a communication network, and improved transceivers adapted to operate in the communication network.

According to a first aspect of the invention, this is achieved by a method for controlling uplink transmissions of a plurality of data bursts in an orthogonal frequency division multiple access system, the method comprising:
determining a first starting time for at least one data burst in the plurality of data bursts associated with a first transceiver of the orthogonal frequency division multiple access system;
allocating, for the at least one data burst, a time interval for transmission of the at least one data burst from the first transceiver; and
transmitting at least one control message indicating the allocated time interval:
wherein the allocating step comprises:
determining whether a transmission time interval starting at the first starting time and a reception time interval for receiving a downlink data burst overlap at the first transceiver;
if the transmission time interval and the reception time interval overlap:
   determining a second starting time for the at least one data burst based on the first starting time; and
   allocating the time interval to start at the second starting time; and
if the transmission time interval and the reception time interval do not overlap:
   allocating the time interval to start at the first starting time.

The step of determining whether the transmission time interval and the reception time interval overlap may comprise determining if the first transceiver is a half-duplex terminal compliant with a frequency division duplex orthogonal frequency division multiple access system. Alternatively or additionally, the step of determining whether the transmission time interval and the reception time interval overlap may comprise determining if the first transceiver is compliant with a time division duplex orthogonal frequency division multiple access system.

In one or more embodiments, where the method is performed when the first transceiver resides in a first cell of the orthogonal frequency division multiple access system, the step of determining the first starting time may comprise determining the first starting time based on a necessary guard period at a base station of the first cell.

The step of determining a second starting time may comprise delaying the first starting time. In one or more embodiments, where the method is performed when a plurality of transceivers reside in a first cell of the orthogonal frequency division multiple access system, the plurality of transceivers comprising the first transceiver and at least a second transceiver, a round trip delay of the second transceiver being the largest round trip delay among the plurality of transceivers, the step of determining a second starting time may comprise delaying the first starting time based on at least one of:
a round trip delay of the first transceiver;
the round trip delay of the second transceiver; and
a worst-case round trip delay associated with the first cell.

In addition, the step of determining a second starting time may further comprise delaying the first starting time based on a switching time for switching between reception and transmission at the first transceiver.

In one or more embodiments, where the method is performed when a plurality of transceivers reside in a first cell of the orthogonal frequency division multiple access system, the plurality of transceivers comprising at least the first transceiver, each data burst in the plurality of data bursts being associated with a transceiver of the plurality of transceivers, the method may further comprise:
determining, for each data burst, a respective starting time based on the second starting time;
allocating a respective time interval, starting at the respective starting time for transmission of each data burst; and
transmitting at least one control message indicative of the allocated respective time intervals.

The step of determining the respective starting times may further comprise determining the respective starting times such that the plurality of data bursts, when transmitted during the allocated respective time intervals, will be aligned in time when they are received at a base station of the first cell.

In one or more embodiments, where the at least one data burst has a first length, and where the step of determining the second starting time comprises determining a second length by shortening the first length, the method may further comprise sending a control signal instructing the first transceiver to shorten the at least one data burst to produce a shortened data burst having the second length.

The step of allocating a time interval starting at the second starting time may further comprise:
determining an ending time for the at least one data burst based on the first starting time and the first length; and
allocating a shortened time interval, starting at the second starting time and ending at the ending time, for transmission of the shortened data burst.

In one or more embodiments, the first starting time is associated with a first transmission time interval, wherein the step of determining the second starting time comprises selecting a second transmission time interval subsequent to the first time interval, and wherein the step of allocating the time interval starting at the second starting time comprises allocating the second transmission time interval for transmission of the at least one data burst.

In one or more embodiments, where the method is performed when a plurality of transceivers reside in a first cell of the orthogonal frequency division multiple access system, the plurality of transceivers comprising at least the first transceiver, each data burst in the plurality of data bursts being associated with a transceiver of the plurality of transceivers, the method may further comprise:
determining, for each data burst, a respective starting time based on the first starting time;
allocating a respective time interval, starting at the respective starting time, for transmission of each data burst; and
transmitting at least one control message indicative of the allocated respective time intervals.

The step of determining the respective starting times may further comprise determining the respective starting times such that the plurality of data bursts, when transmitted during the allocated respective time intervals, will be aligned in time when they are received at a base station of the first cell.

The step of determining the respective starting times may further comprise determining the respective starting times such that the plurality of data bursts, when transmitted during the allocated respective time intervals, when they are received at a base station of the first cell, will be aligned in time with a time interval scheduled for downlink transmission from the first cell.

One or more embodiments may further involve performing the method in compliance with the Universal Mobile Telecommunications System Long Term Evolution standard.

A second aspect of the invention is a computer program product comprising a computer readable medium, having thereon a computer program comprising program instructions, the computer program being loadable into a data-processing unit and adapted to cause the data-processing unit to execute the method according to the first aspect when the computer program is run by the data-processing unit.

A third aspect of the invention is an electronic apparatus for controlling uplink transmissions of a plurality of data bursts in an orthogonal frequency division multiple access system, the apparatus comprising:
a controller, such as a scheduler, adapted to:
   determine a first starting time for at least one data burst in the plurality of data bursts associated with a first transceiver of the orthogonal frequency division multiple access system; and
   allocate, for the at least one data burst, a time interval for transmission of the at least one data burst from the first transceiver; and
a transmitter adapted to:
   transmit at least one control message indicative of the allocated time interval,
wherein the controller is further adapted to:
   determine whether a transmission time interval starting at the first starting time and a reception time interval for receiving a downlink data burst overlap at the first transceiver; and
   if the transmission time interval and the reception time interval overlap:
      determine a second starting time for the at least one data burst based on the first starting time; and
      allocate the time interval to start at the second starting time; and
   if the transmission time interval and the reception time interval do not overlap:
      allocate a time interval to start at the first starting time.

The third aspect may additionally have features identical with or corresponding to any of the various features explained above for the first aspect of the invention.

A fourth aspect of the invention is a transceiver in an orthogonal frequency division multiple access system comprising:
a transmitter adapted to transmit a data burst;
a receiver adapted to receive a timing delay control signal; and
a controller adapted to delay the transmission of the data burst as indicated by the timing delay control signal.

In one or more embodiments, where the data burst has a first length, the receiver may be further adapted to receive a control signal instructing the transceiver to shorten the data burst to produce a shortened data burst having a second length, the transmitter may be further adapted to transmit the shortened data burst, and the controller may be further adapted to delay the transmission of the shortened data burst by the difference between the first and second lengths.

A fifth aspect of the invention is an electronic apparatus comprising at least one transceiver according to the fourth aspect.

In one or more embodiments, the apparatus complies with the Universal Mobile Telecommunications System Long Term Evolution standard. In one or more embodiments, the electronic apparatus is a portable or handheld mobile radio communication equipment, a mobile radio terminal, a mobile telephone, a pager, a communicator, an electronic organizer, a smartphone, a computer, an embedded drive, a mobile gaming device, or a watch.

Further embodiments of the invention are defined in the dependent claims.

One of the advantages of embodiments of the invention is the prevention of interference in the uplink between different terminals having different distances to the base station. This may be of importance in particular in systems applying pre-coded OFDM. The timing alignment procedures may be used to guarantee orthogonality between different terminals. An additional advantage of embodiments of the invention is the prevention of self-interference in TDD terminals and in FDD half-duplex terminals. A further advantage of some of the embodiments is that it may be possible to support full-duplex and half-duplex terminals by a single FDD system. Still an advantage is that guard times may be minimized, which will allow capacity to be kept optimized.

### Brief Description of the Drawings

Further objects, features and advantages of the invention will appear from the following detailed description of embodiments of the invention, with reference being made to the accompanying drawings, in which:
Fig. 1A is a timing diagram illustrating a timing advance technique and the effect of self-interference for TDD terminals;
Fig. 1B is a timing diagram illustrating a timing advance technique and the effect of self-interference for half-duplex terminals in an FDD system;
Fig. 2A, 2B and 2C are timing diagrams illustrating timing alignment techniques according to some embodiments of the invention;
Fig. 3 is a timing diagram illustrating a timing alignment technique according to some embodiments of the invention;
Fig. 4 is a timing diagram illustrating a timing alignment technique according to some embodiments of the invention;
Fig. 5 is a flow diagram illustrating a method of controlling uplink transmission of a packet according to some embodiments of the invention;
Fig. 6A and 6B are flow diagrams illustrating methods of controlling uplink transmissions according to some embodiments of the invention;
Fig. 7 is a schematic front view of a mobile terminal connected, through a radio link, to a base station site, which may comprise an electronic apparatus according to some embodiments of the invention;
Fig. 8 is a block diagram illustrating a transceiver that comprises a transmitter according to some embodiments of the invention; and
Fig. 9 is a block diagram illustrating parts of a base station according to some embodiments of the invention.

### Detailed Description

In the following, a number of embodiments of the invention will be presented wherein the uplink signals sent by half-duplex and full-duplex terminals in FDD systems are aligned when received by the base station. Furthermore, embodiments of the invention will be presented wherein the uplink signals in TDD systems are aligned when received by the base station.

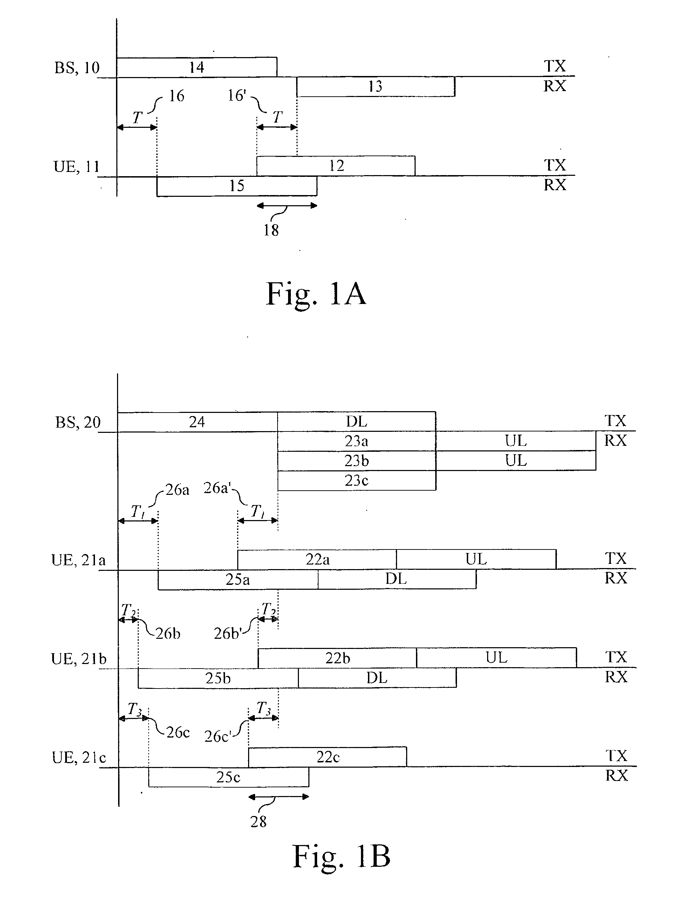

As touched upon earlier, the delay between a base station and a terminal caused by the finite velocity of radio signals cannot be ignored in wide area networks. In Figures 1A and 1B, a timing advance procedure is applied to compensate for the round-trip delay. In these examples, the base station (BS) 10, 20 measures the uplink timing of a packet, transmitted from a terminal (UE) 11, 21a-c as shown at 12, 22a-c and received by the base station as shown at 13, 23a-c. The base station compares the uplink timing to the downlink timing of a packet, transmitted from the base station 10, 20 as shown at 14, 24 and received by the terminals 11, 21a-c as shown at 15, 25a-c, and instructs the terminal to advance its transmissions in order to take into account the round-trip delay. In Figures 1A and 1B, the time intervals denoted by *T* 16, 16' and *T₁*-*T₃* 26a-c, 26'a-c represent the propagation delay for the respective terminal and the round-trip delay equals twice this value. The timing advance value applied to a terminal may be based on the propagation delay and/or the round-trip delay. Since the propagation delay can be different for each terminal 2 1 a-c as shown in Figure 1B, the timing advance value may be different for each terminal. The maximum timing advance value may be sent to terminals at the cell edge as such terminals experience the largest round-trip delay.

Figure 1A shows operation of a timing advance technique if it would be applied in a TDD system, and it is apparent from this figure, that this timing advance technique cannot be applied in FDD systems. A TDD terminal cannot receive and transmit simultaneously. Hence, it cannot start with its transmission before it has received the entire downlink packet. Because uplink and downlink frequencies are taken from the same transmission spectrum, any transmission from the terminal before reception is completed would result in enormous interference in the terminal's own receiver as illustrated at 18, i.e. the receiver front-end would be saturated preventing any signals to be detected.

Figure 1B shows operation of a timing advance technique in an FDD full-duplex system with full-duplex terminals 21a and 21b. The uplink and downlink signals of an FDD system are using different frequency bands. In order to obtain timing alignment between transmission and reception at the base station, the alignment between transmission and reception in the terminals is offset by the timing advance value that corresponds to the terminal's round-trip delay as explained before.

It is apparent, however, from the Figure 1B, that this timing advance technique cannot be applied in FDD systems supporting both full-duplex and half-duplex terminals. A half-duplex terminal cannot start with its transmission before it has received the entire downlink packet, since it cannot receive and transmit simultaneously. If, as in Figure 1B, a half-duplex terminal 21c is also present, the timing advance technique would result in self-interference for this terminal as illustrated at 28. Therefore, with the timing alignment procedure illustrated in Figure 1B, the system is not able to support full-duplex and half-duplex terminals simultaneously.

In some embodiments of the invention, there is introduced a timing offset between transmission and reception in the base station. The timing offset may, for example, correspond to the round-trip delay of a terminal, the maximum round-trip delay among the terminals in a cell, or the worst-case round-trip delay. The timing offset may also depend from the switching time between reception and transmission at the terminal. Retarding or delaying the transmission of uplink packets at the terminals may accomplish this timing offset. Delaying transmission in a terminal will prevent the problem of self-interference. The timing delays may be arranged so that the packets from different terminals arrive simultaneously (or at least within the CP window) at the base station. If so, the transmissions from the terminals remain orthogonal. The timing delays applied to each terminal may differ between different terminals depending on, for example, their respective distance to the base station. The timing delay to be applied by a terminal may be determined by the base station and communicated to the terminal using a control message. The control message may be a timing retard (TR) message.

In some embodiments there is no timing offset between transmission and reception in the base station. Instead, the transmission and reception in the base station are aligned. In some of these embodiments, the uplink bursts sent by half-duplex terminals are shortened or punctured to avoid overlap in transmission and reception at the terminal. In yet some of these embodiments, uplink transmissions for half-duplex terminals are scheduled in a later time slot in order to avoid overlap in transmission and reception at the half-duplex terminal.

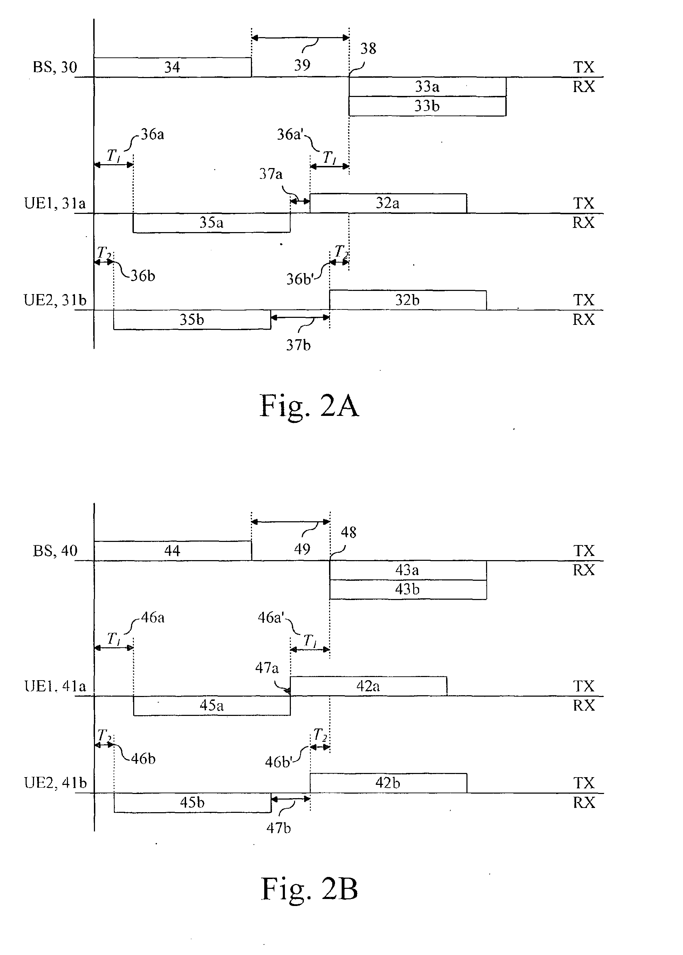

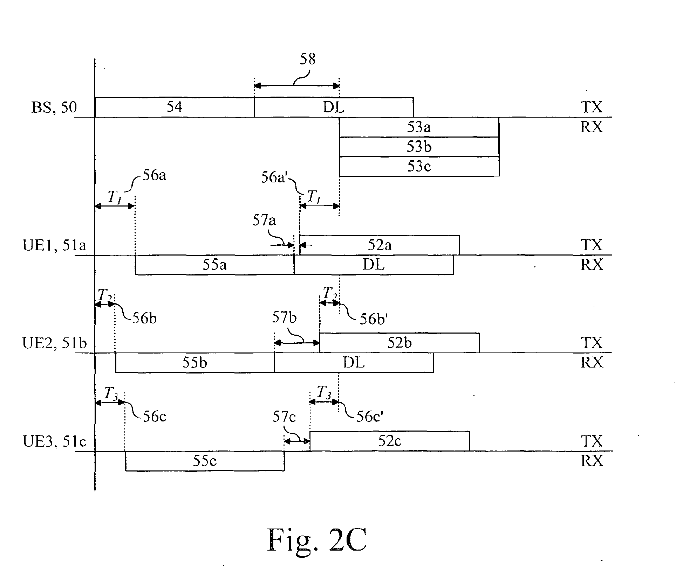

Thus, in order to avoid interference between different terminals in the uplink, they need to be time aligned accurately. Uplink packets may be delayed to get them aligned at the base station. Timing retard (TR) messages may be used to delay the uplink transmissions at the terminals. The timing retard value may depend on the round-trip delay between the base station and the terminal. Example embodiments to this end are illustrated in Figures 2A and 2B for a TDD version of UMTS LTE and in Figure 2C for an FDD system that supports both full-duplex and half-duplex terminals.

In these example embodiments, the base station (BS) 30, 40, 50 measures the uplink timing of a packet, transmitted from the terminal (UE) 31 a-b, 41 a-b, 51 a-c as shown at 32a-b, 42a-b, 52a-c and received by the base station as shown at 33a-b, 43a-b, 53a-c. The base station compares the uplink timing to the downlink timing of a packet, transmitted from the base station 30, 40, 50 as shown at 34, 44, 54 and received by the terminal 3 1 a-b, 4 1 a-b, 51a-c as shown at 35a-b, 45a-b, 55a-c, and instructs the terminal to delay its transmissions in order to take the round-trip delay into account and time align the packets received at the base station. If the packets are sufficiently delayed, there is no self-interference at the terminals.

In Figures 2A-C, the respective propagation delays are represented by the time intervals denoted by *T₁*, *T₂*, *T₃*, 36a-b, 36'a-b, 46a-b, 46'a-b, 56a-c, 56'a-c. The timing delay employed at the respective terminal is represented by time intervals 37a-b, 47a-b, 57a-c. Since the propagation delay can be different for each terminal 31a-b, 41a-b, 51a-c as shown in Figures 2A-C, the timing retard or timing delay value may be different for each terminal.

In the example embodiment illustrated in Figure 2A, the signals are delayed to such an extent that they arrive at the base station at a reference point 38. Point 38 may be determined based on the round-trip delay of the most distant terminal, and possibly also based on the terminal's switching time. When determining point 38, the base station may also account for a necessary guard period for switching between downlink and uplink at the base station. A large guard time may for example be required to take into account signals from other base stations that are still propagating in the air at the time of the switch. Furthermore, even if all base stations are time synchronized (e.g. via a GPS receiver), a guard time may be needed to take into account the delay of the downlink signals propagating from one base station to adjacent base stations. Thus, the required guard time may also depend on the inter-site distance (ISD). Hence, the timing offset 39 is determined based on the most demanding needs among the terminals (to avoid overlap between reception and transmission) and the base station (to allow a sufficient guard period).

As shown in Figure 2A, the transmission of UE2 31b (packet 32b) is delayed (retarded) more than the transmission of UE1 31a. This is because UE2 is closer to the base station and therefore has a lower propagation delay 36b, 36'b than UE1.

In the example embodiment shown in Figure 2B, the effect of the interference from the adjacent base stations is ignored. This embodiment may for example be applied in a hotspot application where there is only a single base station. In that case, as illustrated in Figure 2B, the reference point 48 and the timing offset 49 are not determined based on the ISD, but may be determined based on the round-trip delay of the most distant terminal. In this example, the time between downlink and uplink in the most distant terminal is only the time this terminal needs to retune its transceiver, which may be within a microsecond. Therefore, the timing delay for this terminal is approximately zero in this example as shown at 47a.

As is seen in Figures 2A-B terminals that are closer to the base station are consequently instructed to delay their transmission more than terminals further away, such that they all arrive simultaneously at the base station receiver.

As the most distant terminal moves closer to or away from the base station, the propagation delay changes and thus the location in time of reference points 38, 48. In general, updates of the timing delay values may be required because terminals are moving and the propagation delays change over time. Hence, it may be necessary to update the delay times for the different terminals. This updating may be done, for example, periodically at regular time intervals, or based on a detected need for an update, or based on a detected change in the time alignment of the uplink packets at the base station. The updates may be realized as TR update messages to all terminals. In some embodiments, the base station measures, for each uplink transmission, whether the uplink transmission is still time aligned for each terminal. If an uplink transmission from a terminal is not aligned, a TR update message is sent to that terminal. Updates of the delay times may be appropriate for all of the example embodiments in Figures 2A-C.

The example embodiment illustrated in Figure 2C is applicable to FDD systems supporting both full-duplex and half-duplex terminals. In Figure 2C, UE1 51a and UE2 51b are terminals in full-rate operation, and UE3 51c is a terminal in half-rate operation. In this example embodiment, a timing offset 58 is applied between the transmit and receive timing at the base station 50 similarly to the example embodiments shown in Figures 2A-B. The timing offset 58 may correspond to the maximum round-trip delay 2*T₃*, plus the reception-transmission switching time, among the half-duplex terminals (only one of which is shown in Figure 2C). As before, the uplink transmissions of the remaining terminals are delayed accordingly to ensure that the uplink packets arrive simultaneously at the base station. Thus, the timing offset in the base station addresses the self-interference in half-duplex terminals.

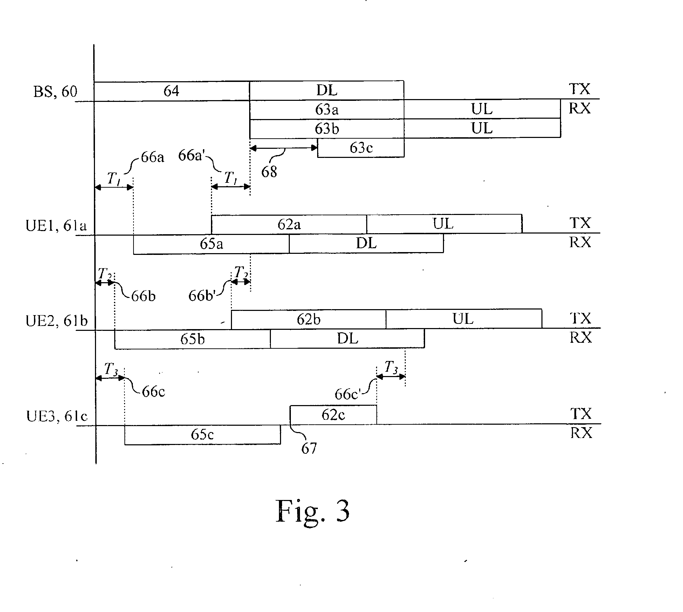

An alternative example embodiment is illustrated in Figure 3. In this embodiment, the base station (BS) 60 measures the uplink timing of a packet, transmitted from the terminal (UE) 61 a-c as shown at 62a-c and received by the base station as shown at 63a-c, with respect to the downlink timing of a packet, transmitted from the base station 60 as shown at 64 and received by the terminal 61a-c as shown at 65a-c. The base station then instructs the terminals to advance their transmissions in order to take into account the round-trip delays and to time align the packets received at the base station, similarly to what is done in Figures 1A-B. Thus, the downlink and uplink packets are aligned at the base station. No timing offset is applied.

Furthermore, the base station instructs the half-duplex terminal 61c to shorten the packet to be transmitted in the uplink and to commence the transmission of this packet at a delayed point in time 67.

Modifying the burst format may shorten the packet 62c. The shortening may be proportional to the round-trip delay of the half-duplex terminal. The shortening may also depend on the terminal's reception-transmission switching time. If the packet is sufficiently shortened and delayed, there is no self-interference at the half-duplex terminal. The length of the shortened burst may differ between different half-duplex terminals depending on the terminals' respective round-trip delay. In some embodiments of the invention, a single shortened length is selected and applied to all half-duplex terminals. The approach results in a simplified base station receiver. The length may be based on the maximum round-trip delay and maximum switching time among the half-duplex terminals. Alternatively, the length may be a pre-determined length based on, for example the worst-case round-trip delay, which in turn depends on the cell size.

In Figure 3, the respective propagation delays are represented by time intervals 66a-b, 66'a-b. The packet 62c is shortened by an amount 68 such that time alignment of the received packets is ensured at the base station while no self-interference is experienced at the half-duplex terminal 6 1 c.

As mentioned before, time synchronization between transmission and reception is maintained at the base station in this example embodiment. This is in contrast to the embodiments illustrated in Figures 2A-C, where a timing offset was introduced between transmission and reception in the base station.

Shortening of uplink packets results in a reduction of the uplink throughput for the half-duplex terminals. This may, however, not be a severe problem, because in half-duplex operation power consumption and/or cost is commonly more important than throughput.

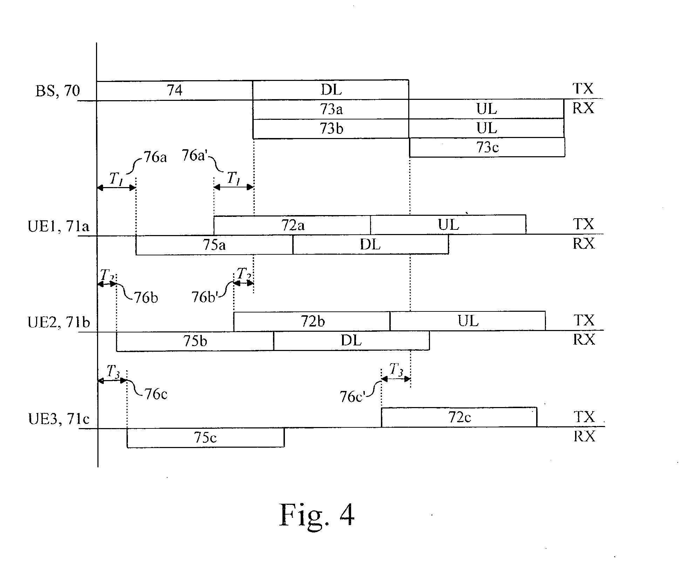

A further example embodiment of the invention is illustrated in Figure 4. In this embodiment, the base station (BS) 70 measures the uplink timing of a packet, transmitted from the terminal (UE) 71 a-c as shown at 72a-c and received by the base station as shown at 73a-c, with respect to the downlink timing of a packet, transmitted from the base station 70 as shown at 74 and received by the terminal 71 a-c as shown at 75a-c. The base station instructs the terminals to advance their transmissions in order to take into account the round-trip delays and to time align the packets received at the base station, similarly to what was done in Figures 1A-B.

The base station then applies a smart scheduling technique. By having a delay of one or more slots between the half-duplex downlink and uplink, a sufficient guard period is created to avoid overlap in transmission and reception at the half-duplex terminal. Hence, when applying this technique the base station schedules the uplink packets of a half-duplex terminal in a slot that is not adjacent to a slot where a downlink transmission to the half-duplex terminal has been scheduled, as illustrated by the downlink burst 75c and the uplink burst 72c.

In this example embodiment, time synchronization between transmission and reception is also maintained at the base station in contrast to the embodiments illustrated in Figures 2A-C, where a timing offset was introduced between transmission and reception in the base station.

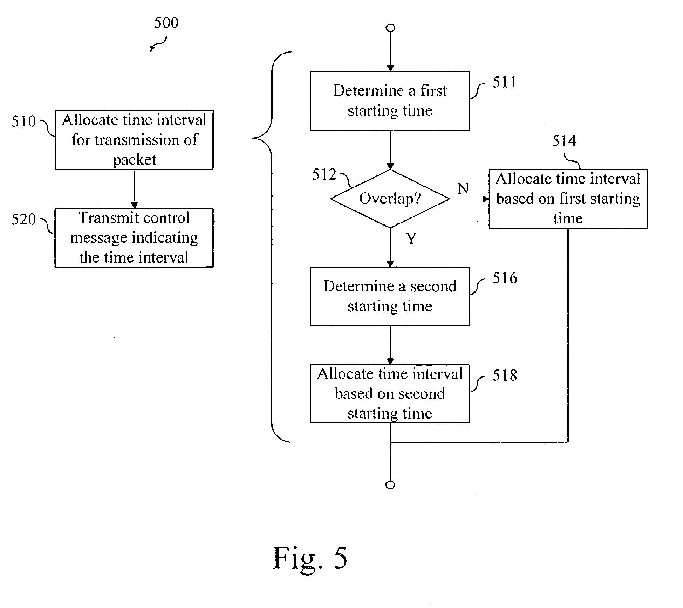

Figure 5 illustrates a method 500 for controlling timing of the transmission of an uplink packet according to some embodiments of the invention. The method starts at step 510, where a time interval is allocated for transmission of the uplink packet.

The allocation of the time interval in step 510 starts in method sub-step 511. In sub-step 511, a first point in time is determined for the packet. This first point in time is denoted the first starting time and is based on measurements of the uplink timing of a packet received by the base station in relation to the downlink timing of a packet transmitted from the base station. This first starting time may correspond to the starting time of an uplink transmission of the packet if a timing advance technique was applied to align the packets in time.

In sub-step 512, it is determined whether there is a risk of detrimental overlap between transmissions and receptions in the terminal that will transmit the packet. This may involve evaluating the first starting time in relation to a necessary guard interval. This may also involve determining whether the terminal is a half-duplex FDD terminal. If the system is a TDD terminal it may be determined that there is always a risk of detrimental overlap in a terminal.

If it is determined that there is no risk of detrimental overlap in the terminal that will transmit the packet (NO path out of sub-step 512), the process proceeds to sub-step 514, where a time interval is allocated for transmission of the packet based on the first starting time, and the process continues to step 520.

If, however, it is determined that there is risk of detrimental overlap in the terminal that will transmit the packet (YES path out of sub-step 512), the process proceeds to sub-step 516, where a second starting time is determined based on the first starting time. The second starting time may, for example, be determined by delaying the first starting time.

The first starting time may be delayed based on, for example, either of the round trip delay of the transceiver, the round trip delay of another transceiver having a larger round-trip delay, or a worst-case round trip delay associated with the size of the cell. The first starting time may also be delayed based on the switching time for switching between reception and transmission at the transceiver. The first starting time may also be delayed based on the length of a shortened version of the packet. The first starting time may also be delayed so that the second starting time corresponds to a first starting time of a later time slot.

The process then continues to sub-step 518, where a time interval is allocated for transmission of the packet based on the second starting time, and the process continues to step 520.

Finally, the method ends in step 520, where one or more control messages are transmitted. The one or more control messages indicate the time interval allocated for transmission of the uplink packet.

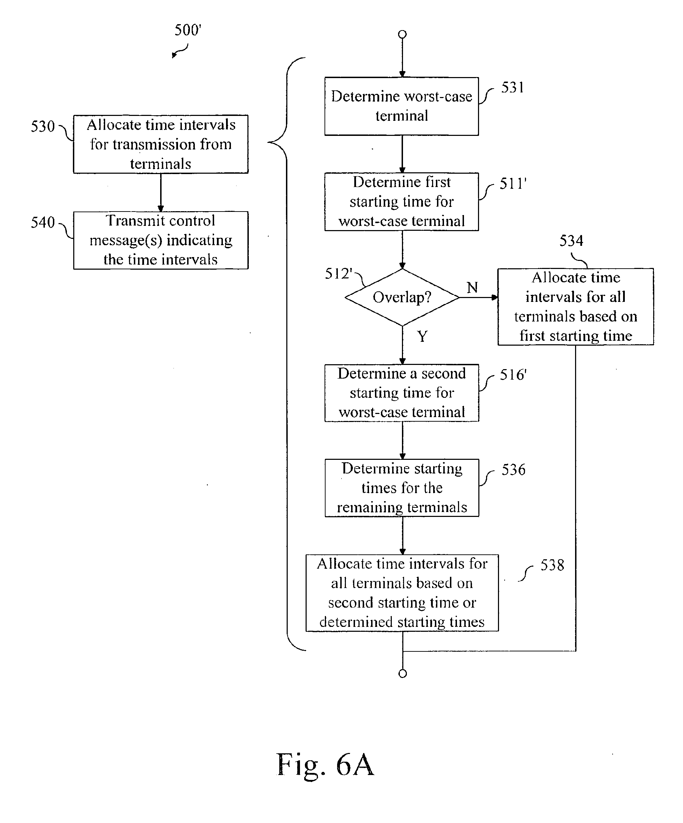

Figure 6A illustrates a method 500' for controlling timing of the transmission of uplink packets according to some embodiments of the invention. The method starts at step 530, where time intervals are allocated for transmission of a plurality of uplink packets from different terminals of the system.

The allocation of the time intervals in step 530 starts in method sub-step 531. In sub-step 531, it is determined which terminal is the worst-case terminal when it comes to round-trip delay time, that is, which terminal in the cell is most distant from the base station. Alternatively, the worst-case terminal may be defined as the terminal having the largest round-trip delay time among the half-duplex terminals of the cell in an FDD system. The reception-transmission switching times of each terminal may also be taken into account when determining the worst-case terminal.

Then, in sub-step 511', a first point in time is determined for the worst-case terminal. This first point in time is denoted the first starting time and is based on measurements of the uplink timing of a packet from the worst-case terminal received by the base station in relation to the downlink timing of a packet transmitted from the base station. This first starting time may correspond to the starting time of an uplink transmission of the packet if a timing advance technique was applied to align the packets in time.

In sub-step 512', it is determined whether there is a risk of detrimental overlap between transmissions and receptions in the worst-case terminal. This may involve determining whether the terminal is a half-duplex FDD terminal. If the system is a TDD terminal it may be determined that there is always a risk of detrimental overlap in a terminal.

If it is determined that there is no risk of detrimental overlap in the worst-case terminal (NO path out of sub-step 512'), the process proceeds to sub-step 534, where time intervals are allocated for transmission of the plurality of packets based on the first starting time, and the process continues to step 540. The allocation may be performed such that all uplink packets are time aligned when received at the base station.

If, however, it is determined that there is risk of detrimental overlap in the worst-case terminal (YES path out of sub-step 512'), the process proceeds to sub-step 516', where a second starting time is determined for the worst-case terminal based on the first starting time. The second starting time may, for example, be determined by delaying the first starting time.

The first starting time may be delayed based on, for example, either of the round trip delay of the worst-case transceiver, or a worst-case round trip delay associated with the size of the cell. The first starting time may also be delayed based on the switching time for switching between reception and transmission at the worst-case transceiver.

Then, in sub-step 536, starting times are determined for the remaining terminals. These starting times may be determined based on the second starting time for the worst-case terminal. For example, the starting times may be determined such that the uplink packets will be aligned in time when they are received at the base station.

The process then continues to sub-step 538, where time intervals are allocated for transmission of the packets based on the second starting time for the worst-case terminal and based on the determined starting times for the remaining terminals, and the process continues to step 540.

Finally, the method ends in step 540, where one or more control messages are transmitted. The one or more control messages may indicate the time intervals allocated for transmission of the uplink packets.

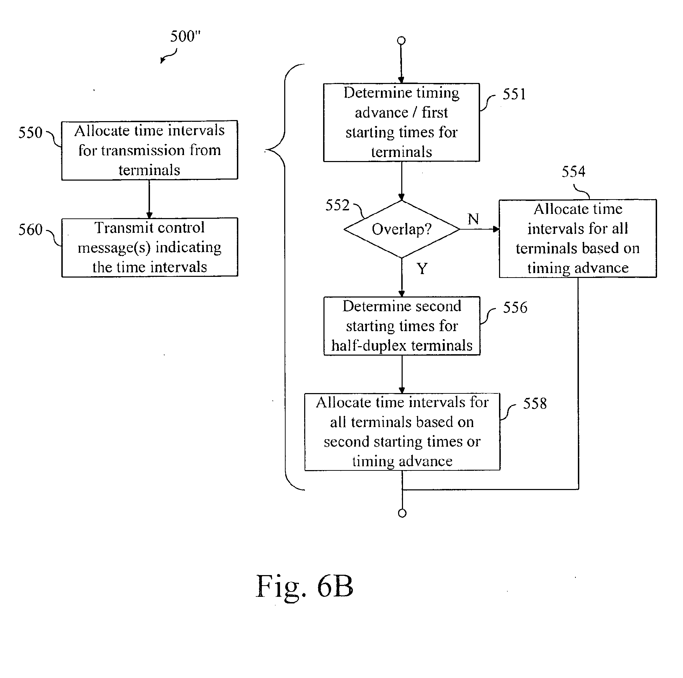

Figure 6B illustrates a method 500" for controlling timing of the transmission of uplink packets according to some embodiments of the invention. The method starts at step 550, where time intervals are allocated for transmission of a plurality of uplink packets from different terminals of the system.

The allocation of the time intervals in step 550 starts in method sub-step 551. In sub-step 551, a timing advance is determined for each of the terminals. The timing advance may be determined such that the packets will be aligned in time when they are received at the base station. The timing advance may also be determined so that reception and transmission is time aligned at the base station. The timing advance defines a first starting time for each of the terminals. The determination of the timing advance may be based on measurements of the uplink timing of packets from the respective terminals received by the base station in relation to the downlink timing of a packet transmitted from the base station.

In sub-step 552, it is determined whether there is a risk of detrimental overlap between transmissions and receptions in any of the terminals. This may involve determining whether there are terminals in half-duplex operation in an FDD system.

If it is determined that there is no risk of detrimental overlap in any of the terminals (NO path out of sub-step 552), the process proceeds to sub-step 554, where time intervals are allocated for transmission of the plurality of packets based on the timing advance determined for each terminal in sub-step 551, and the process continues to step 560.

If, however, it is determined that there is risk of detrimental overlap in any of the terminals (YES path out of sub-step 552), the process proceeds to sub-step 556, where a second starting time is determined for those terminals based on the first starting times of the respective terminals.

For example, it may be determined to shorten the packets to be transmitted from those terminals. Then, the second starting time of a packet is determined as the first starting time delayed by the same amount that the packet was shortened. How much the packet is shortened may be based on either of the round-trip delay of the terminal, the round trip delay of the worst-case terminal, or a worst-case round trip delay associated with the size of the cell. How much the packet is shortened may also be determined based on the switching time for switching between reception and transmission at the transceiver. Alternatively, the length of the shortened packet may be predetermined.

As a further example of operation in sub-step 556, the second starting time may be determined by selecting a later time slot for transmission of a packet of a half-duplex terminal.

The process then continues to sub-step 558, where time intervals are allocated for transmission of the packets. For the terminals where there is risk of detrimental overlap, the allocated time interval is based on the second starting time determined for the respective terminal. For the terminals where there is no risk of detrimental overlap, the allocated time interval is based on the respective first starting time. For example, the time intervals may be allocated such that the packets will be aligned in time when they are received at the base station. Furthermore, the time intervals may be allocated such that transmission and reception is aligned in time at the base station.

The process then continues to step 560, where one or more control messages are transmitted. The one or more control messages may indicate the time intervals allocated for transmission of the uplink packets.

One or more terminals in the OFDM system may receive the one or more control messages transmitted according to the methods illustrated in Figures 5, 6A and 6B. The terminal may then transmit a burst in an allocated time interval as indicated by the one or more control messages. More particularly, the terminal may delay the transmission of the burst as indicated by the one or more control message. If so indicated, the burst may also be shortened before transmission.

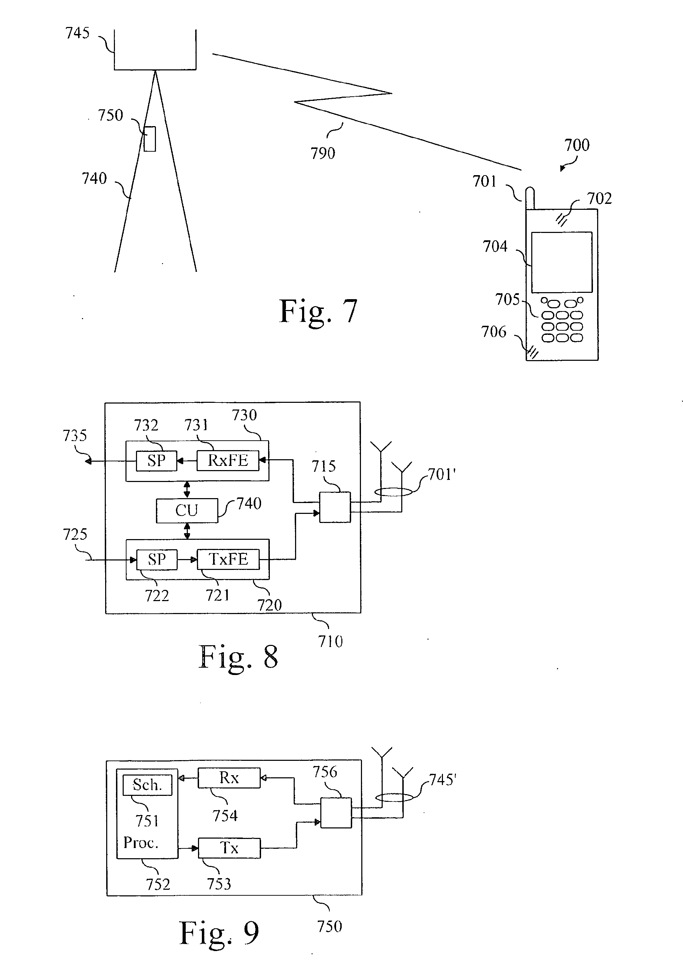

Figure 7 illustrates a mobile terminal 700 connected, through a radio link 790, to a base station site 740. The base station site 740 comprises one or more antennas 745 and at least one base station 750. The base station may be adapted to control uplink transmissions according to embodiments of the invention.

The mobile telephone 700 is illustrated in a schematic front view. This example mobile telephone 700 comprises an antenna 701 mounted on the housing of the apparatus. Alternatively, the mobile telephone 700 may have an internal antenna mounted within the housing of the apparatus. The mobile terminal 700 may even comprise multiple antennas. The mobile telephone 700 may further comprise a display 704, a keypad 705, a loudspeaker 702, and a microphone 706, which together provides a man-machine interface for operating the mobile telephone 700.

The mobile telephone 700 is adapted to connect to a mobile telecommunication network via the wireless link 790 to the radio base station 750. Hence, a user of the mobile telephone 700 may use conventional circuit-switched telecommunication services such as voice calls, data calls, video calls, and fax transmissions, and/or packet-based services such as electronic messaging, VoIP, Internet browsing, electronic commerce, etc. To this end, the mobile telephone may be compliant with at least one mobile telecommunication standard, for instance UMTS (Universal Mobile Telecommunications System), or UMTS LTE (UMTS Long Term Evolution).

Figure 8 is a block diagram of a transceiver 710 that may be comprised in a mobile telephone 700 according to some embodiments of the invention. The example transceiver 710 comprises a receiver 730, a transmitter 720 and separating circuitry 715. The separating circuitry 715, which may include an antenna switch and/or various filters, is adapted to guide signals from the transmitter 720 to the one or more antennas 701', and to guide signals from the one or more antennas 701' to the receiver 730. The transceiver 710 further comprises one or more controllers 740. The one or more controllers may be implemented separately from the receiver 730 and the transmitter 720 or it may be integral to either the receiver 730 or the transmitter 720 or both.

The receiver 730 comprises a receiver front end (RxFE) 731 and signal processing circuitry (SP) 732. The receiver front end 731 may comprise filters, downconversion circuitry and an analog-to-digital converter, and the signal processing circuitry 732 may comprise a demodulator, a decoder, and a de-multiplexer. The receiver 730 is adapted to receive a control message, or timing delay control signal, indicating an allocated time interval for transmitting an uplink packet, or uplink data burst. The control message may also comprise an instruction to shorten the uplink packet before transmission. The information in the control message is then supplied to the one or more controller 740. Other signals processed by the receiver may be supplied to further processing and/or higher layers of a system stack as indicated at 735.

The information in the control message may be used by the one or more controllers 740. For example, the one or more controllers may be adapted to delay the transmission of the uplink packet as indicated by the timing delay control signal. Furthermore, the one or more controllers may be adapted to shorten the uplink packet and supply the shortened packet to the transmitter 720. Alternatively, the transmitter may be adapted to shorten the uplink packet before transmitting it.

The transmitter 720 comprises a transmitter front end (TxFE) 721 and signal processing circuitry (SP) 722. The transmitter front end 721 may comprise a digital-to-analog converter, filters, and up-conversion circuitry, and the signal processing circuitry 722 may comprise a multiplexer, an encoder, and a modulator. The transmitter 720 is adapted to transmit uplink packets, which may be supplied by higher layers as indicated at 725, during the allocated time interval as indicated by the control message.

Figure 9 is a block diagram of functional units that may be comprised in a base station 750 according to some embodiments of the invention. The example base station 750 is adapted to perform at least one method of controlling uplink transmissions of a plurality of data bursts in an orthogonal frequency division multiple access system according to embodiments of the invention, such as, for example, any of the methods described in Figures 5, 6A and 6B. The example base station 750 comprises a controller, such as a scheduler (Sch.) 751, included in a processing unit (Proc.) 752. The scheduler may alternatively be comprised in another entity, such as a radio network controller. The processing unit 752 may comprise processing circuitry of any suitable type(s), such as application-specific integrated circuits (ASIC), central processing units (CPU) etc. The processing circuitry may be adapted to run, for example, data or signal processing algorithms.

The base station 750 further comprises transmitter circuitry (Tx) 753, receiver circuitry (Rx) 754, and separating circuitry 756. The separating circuitry 756, which may include an antenna switch and/or various filters, is adapted to guide the signals from the transmitter circuitry 753 to the one or more antennas 745', and to guide signals from the one or more antennas 745' to the receiver circuitry 754. The transmitter circuitry 753 may comprise, for example, processing circuitry such as multiplexers, encoders, modulators, and a transmitter front end. The transmitter circuitry 753 is adapted to transmit control messages including scheduling information. The scheduling information may be information that indicates one or more allocated time interval for transmitting uplink packets. The scheduling information may also comprise a command to shorten an uplink packet before transmission.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in the base station 750. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in Figures 5, 6A and 6B.

One of the advantages of embodiments of the invention is the prevention of interference in the uplink between different terminals having different distances to the base station. This is of importance in particular in systems applying pre-coded OFDM. The timing alignment procedures guarantee orthogonality between different terminals. An additional advantage is the prevention of self-interference in TDD terminals and in FDD half-duplex terminals. A further advantage is that it may be possible to support full-duplex and half-duplex terminals by a single FDD system.

Throughout the description, example embodiments of the invention have focused on UMTS LTE. It should be noted, however, that this was done to simplify the description and is by no means limiting to the invention. Contrarily, embodiments of the invention are equally applicable to other communication standards such as, for example, WiBro, IEEE 802.16d, IEEE 802.16e, or IMT-2000 OFDMA TDD WMAN.

The described embodiments of the invention and their equivalents may be performed by general-purpose circuits associated with or integral to the scheduler, such as digital signal processors (DSP), central processing units (CPU), co-processor units, or by specialized circuits such as for example application-specific integrated circuits (ASIC). All such forms are contemplated to be within the scope of the invention.

The invention may be embodied within an electronic apparatus comprising a scheduler or transceiver according to any of the embodiments of the invention. The electronic apparatus may, for example, be a portable or handheld mobile radio communication equipment, a mobile radio terminal, a mobile telephone, a pager, a communicator, an electronic organizer, a smartphone, a computer, an embedded drive, a mobile gaming device, or a (wrist) watch. The electronic apparatus may alternatively be a base station or a base station controller in a telecommunication system.

The invention has been described herein with reference to various embodiments. However, a person skilled in the art would recognize numerous variations that would still fall within the scope of the invention. For example, the method embodiments described herein describes the method through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that, in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

It should be emphasized that the term "comprises/comprising" when used in this specification is taken to specify the presence of stated features, integers, steps, or components, but does not preclude the presence or addition of one or more other features, integers, steps, components, or groups thereof.

Hence, it should be understood that the limitations of the described embodiments are merely for illustrative purpose and by no means limiting. Instead, the invention is construed to be limited by the appended claims.

## Claims

1. A method (500) for controlling uplink transmissions of a plurality of data bursts in an orthogonal frequency division multiple access system, the method comprising:
determining (501) a first starting time for at least one data burst in the plurality of data bursts;
allocating (510), for the at least one data burst, a time interval for transmission of the at least one data burst from a first transceiver; and
transmitting (520) at least one control message indicating the allocated time interval;
**characterized in that** the allocating step comprises:
determining (512) whether a transmission time interval starting at the first starting time and a reception time interval for receiving a downlink data burst overlap at the first transceiver;
if the transmission time interval and the reception time interval overlap:
determining (516) a second starting time for the at least one data burst based on the first starting time, wherein the second starting time is later than the first starting time and wherein a transmission time interval starting at the second starting time and a reception time interval for receiving a downlink data burst do not overlap at the first transceiver; and
allocating (518) the time interval to start at the second starting time;
and
if the transmission time interval and the reception time interval do not overlap:
allocating (514) the time interval to start at the first starting time.

2. The method (500) according to claim 1, wherein the step of determining (512) whether the transmission time interval and the reception time interval overlap comprises determining if the first transceiver is a half-duplex terminal compliant with a frequency division duplex orthogonal frequency division multiple access system.

3. The method (500) according to claim 1, wherein the step of determining (512) whether the transmission time interval and the reception time interval overlap comprises determining if the first transceiver is compliant with a time division duplex orthogonal frequency division multiple access system.

4. The method (500) according to any of claims 1 to 3, performed when the first transceiver resides in a first cell of the orthogonal frequency division multiple access system, wherein the step of determining (501) the first starting time comprises determining the first starting time based on a necessary guard period at a base station of the first cell.

5. The method (500) according to any of claims 1 to 4, wherein the step of determining (516) a second starting time comprises delaying the first starting time.

6. The method (500) according to claim 5, performed when a plurality of transceivers reside in a first cell of the orthogonal frequency division multiple access system, the plurality of transceivers comprising the first transceiver and at least a second transceiver, a round trip delay of the second transceiver being the largest round trip delay among the plurality of transceivers, wherein the step of determining (516) a second starting time comprises delaying the first starting time based on at least one of:
a round trip delay of the first transceiver;
the round trip delay of the second transceiver; and
a worst-case round trip delay associated with the first cell.

7. The method (500) according to claim 6, wherein the step of determining (516) a second starting time further comprises delaying the first starting time based on a switching time for switching between reception and transmission at the first transceiver.

8. The method (500) according to any of claims 5 to 7, performed when a plurality of transceivers reside in a first cell of the orthogonal frequency division multiple access system, the plurality of transceivers comprising at least the first transceiver, each data burst in the plurality of data bursts being associated with a transceiver of the plurality of transceivers, the method further comprising:
determining (516), for each data burst, a respective starting time based on the second starting time;
allocating (518) a respective time interval, starting at the respective starting time for transmission of each data burst; and
transmitting (520) at least one control message indicative of the allocated respective time intervals.

9. The method (500) according to claim 8, wherein the step of determining the respective starting times further comprises determining the respective starting times such that the plurality of data bursts, when transmitted during the allocated respective time intervals, will be aligned in time when they are received at a base station of the first cell.

10. The method (500) according to any of claims 1 to 4, wherein the at least one data burst has a first length, and wherein the step of determining (516) the second starting time comprises determining a second length by shortening the first length, the method further comprising sending a control signal instructing the first transceiver to shorten the at least one data burst to produce a shortened data burst having the second length.

11. The method (500) according to claim 10, wherein the step of allocating (518) a time interval starting at the second starting time further comprises:
determining an ending time for the at least one data burst based on the first starting time and the first length; and
allocating a shortened time interval, starting at the second starting time and ending at the ending time, for transmission of the shortened data burst.

12. The method (500) according to any of claims 1 to 4, wherein the first starting time is associated with a first transmission time interval, wherein the step of determining (516) the second starting time comprises selecting a second transmission time interval subsequent to the first time interval, and wherein the step of allocating (518) the time interval starting at the second starting time comprises allocating the second transmission time interval for transmission of the at least one data burst.

13. The method (500) according to any of claims 10 to 12, performed when a plurality of transceivers reside in a first cell of the orthogonal frequency division multiple access system, the plurality of transceivers comprising at least the first transceiver, each data burst in the plurality of data bursts being associated with a transceiver of the plurality of transceivers, the method further comprising:
determining (516), for each data burst, a respective starting time based on the first starting time;
allocating (518) a respective time interval, starting at the respective starting time, for transmission of each data burst; and
transmitting (520) at least one control message indicative of the allocated respective time intervals.

14. The method (500) according to claim 13, wherein the step of determining the respective starting times further comprises determining the respective starting times such that the plurality of data bursts, when transmitted during the allocated respective time intervals, will be aligned in time when they are received at a base station of the first cell.

15. The method (500) according to claim 14, wherein the step of determining (516) the respective starting times further comprises determining the respective starting times such that the plurality of data bursts, when transmitted during the allocated respective time intervals, when they are received at a base station of the first cell, will be aligned in time with a time interval scheduled for downlink transmission from the first cell.

16. The method according to any of claims 1 to 15, further comprising performing the method in compliance with the Universal Mobile Telecommunications System Long Term Evolution standard.

17. A computer program product comprising a computer readable medium, having thereon a computer program comprising program instructions, the computer program being loadable into a data-processing unit and adapted to cause the data-processing unit to execute the method according to any of claims 1 to 16 when the computer program is run by the data-processing unit.

18. An electronic apparatus (750) for controlling uplink transmissions of a plurality of data bursts in an orthogonal frequency division multiple access system, the apparatus comprising:
a controller (751, 752) adapted to:
determine a first starting time for at least one data burst in the plurality of data bursts; and
allocate, for the at least one data burst, a time interval for transmission of the at least one data burst from a first transceiver (710); and
a transmitter (753) adapted to:
transmit at least one control message indicative of the allocated time interval,
**characterized in that** the controller is further adapted to:
determine whether a transmission time interval starting at the first starting time and a reception time interval for receiving a downlink data burst overlap at the first transceiver (710); and
if the transmission time interval and the reception time interval overlap:
determine a second starting time for the at least one data burst based on the first starting time, wherein the second starting time is later than the first starting time and wherein a transmission time interval starting at the second starting time and a reception time interval for receiving a downlink data burst do not overlap at the first transceiver (710); and
allocate the time interval to start at the second starting time; and
if the transmission time interval and the reception time interval do not overlap:
allocate a time interval to start at the first starting time.

19. The electronic apparatus (750) according to claim 18, wherein the controller (751, 752) is adapted to determine that the transmission time interval and the reception time interval overlap if the first transceiver is a half-duplex terminal compliant with a frequency division duplex orthogonal frequency division multiple access system.

20. The electronic apparatus (750) according to claim 18, wherein the controller (751, 752) is adapted to determine that the transmission time interval and the reception time interval overlap if the first transceiver is compliant with a time division duplex orthogonal frequency division multiple access system.

21. The electronic apparatus (750) according to any of claims 18 to 20, wherein the first transceiver (710) resides in a first cell of the orthogonal frequency division multiple access system, and wherein the controller (751, 752) is adapted to determine the first starting time based on a necessary guard period at a base station of the first cell.

22. The electronic apparatus (750) according to any of claims 18 to 21, wherein the controller (751, 752) is adapted to determine the second starting time for the at least one data burst by delaying the first starting time.

23. The electronic apparatus (750) according to claim 22, wherein a plurality of transceivers reside in a first cell of the orthogonal frequency division multiple access system, the plurality of transceivers (710) comprising the first transceiver (710) and at least a second transceiver, wherein a round trip delay of the second transceiver is the largest round trip delay among the plurality of transceivers, and wherein the controller (751, 752) is adapted to delay the first starting time based on at least one of:
a round trip delay of the first transceiver (710);
the round trip delay of the second transceiver; and
a worst-case round trip delay associated with the first cell.

24. The electronic apparatus (750) according to claim 23, wherein the controller (751, 752) is further adapted to delay the first starting time based on a switching time for switching between reception and transmission at the first transceiver (710).

25. The electronic apparatus (750) according to any of claims 22 to 24, wherein the transmitter (753) is adapted to send a control signal indicating the timing delay to the first transceiver (710).

26. The electronic apparatus (750) according to any of claims 22 to 25, wherein a plurality of transceivers (710) reside in a first cell of the orthogonal frequency division multiple access system, the plurality of transceivers (710) comprising at least the first transceiver (710), and wherein the controller (751, 752) is further adapted to:
determine, for each data burst, a respective starting time based on the second starting time; and
allocate a respective time interval, starting at the respective starting time, for transmission of each data burst,
and wherein the transmitter (753) is further adapted to:
transmit at least one control message indicative of the allocated respective time intervals.

27. The electronic apparatus (750) according to claim 26, wherein the controller (751, 752) is adapted to determine the respective starting times such that the plurality of data bursts, when transmitted during the allocated respective time intervals, will be aligned in time when they are received at a base station of the first cell.

28. The electronic apparatus (750) according to any of claims 18 to 21, wherein the at least one data burst has a first length, and wherein the transmitter (753) is adapted to send a control signal instructing the first transceiver (710) to shorten the at least one data burst to produce a shortened data burst having a second length.

29. The electronic apparatus (750) according to claim 28, wherein the controller (751, 752) is further adapted to:
determine an ending time for the at least one data burst based on the first starting time and the first length; and
allocate a shortened time interval, starting at the second starting time and ending at the ending time, for transmission of the shortened data burst.

30. The electronic apparatus (750) according to any of claims 18 to 21, wherein the first starting time is associated with a first transmission time interval, and wherein the controller (751, 752) is adapted to:
select a second transmission time interval subsequent to the first time interval;
and
allocate the second transmission time interval for transmission of the at least one data burst.

31. The electronic apparatus (750) according to any of claims 28 to 30, wherein a plurality of transceivers (710) reside in a first cell of the orthogonal frequency division multiple access system, the plurality of transceivers (710) comprising at least the first transceiver (710), wherein the controller (751, 752) is further adapted to:
determine, for each data burst, a respective starting time based on the first starting time; and
allocate a respective time interval, starting at the respective starting time, for transmission of each data burst,
and wherein the transmitter (753) is further adapted to:
transmit at least one control message indicative of the allocated respective time intervals.

32. The electronic apparatus (750) according to claim 31, wherein the controller (751, 752) is adapted to determine the respective starting times such that the plurality of data bursts, when transmitted during the allocated respective time intervals, will be aligned in time when they are received at a base station of the first cell.

33. The electronic apparatus (750) according to claim 32, wherein the controller (751, 752) is adapted to determine the respective starting times such that the plurality of data bursts, when transmitted during the allocated respective time intervals, when they are received at a base station of the first cell, will be aligned in time with a time interval scheduled for downlink transmission from the first cell.

34. The electronic apparatus (750) according to any of claims 18 to 33, wherein the apparatus is compliant with the Universal Mobile Telecommunications System Long Term Evolution standard.

35. The electronic apparatus (750) according to any of claims 18 to 34, wherein the electronic apparatus is a base station, or a base station controller.

36. A transceiver (710) in an orthogonal frequency division multiple access system comprising:
a transmitter (720) adapted to transmit a data burst, wherein the data burst has a first length;
a receiver (730) adapted to receive a timing delay control signal; and
a controller (740) adapted to delay the transmission of the data burst as indicated by the timing delay control signal;
**characterized in that** the transceiver comprises
circuitry (732,740, 722) adapted to produce a shortened data burst having a second length based on the received timing delay control signal when the transmission time interval and the reception time interval overlap;
the transmitter (720) being adapted to transmit the shortened data burst; and
the controller (740) being adapted to delay the transmission of the shortened data burst by the difference between the first and second lengths;
wherein the timing delay control signal is based on:
determining a first starting time for the data burst,
determining whether a transmission time interval starting at the first starting time and a reception time interval for receiving a downlink data burst overlap at the transceiver (710);
if the transmission time interval and the reception time interval overlap:
determining a second starting time for the at least one data burst based on the first starting time, wherein the second starting time is later than the first starting time and wherein a transmission time interval starting at the second starting time and a reception time interval for receiving a downlink data burst do not overlap at the transceiver (710); and
allocating the time interval to start at the second starting time; and if the transmission time interval and the reception time interval do not overlap:
allocating the time interval to start at the first starting time.

37. An electronic apparatus (700) comprising at least one transceiver according to claim 36.

38. The electronic apparatus (700) according to claim 37, wherein the apparatus complies with the Universal Mobile Telecommunications System Long Term Evolution standard.

39. The electronic apparatus (700) according to any of claims 37 to 38, wherein the electronic apparatus is a portable or handheld mobile radio communication equipment, a mobile radio terminal, a mobile telephone, a pager, a communicator, an electronic organizer, a smartphone, a computer, an embedded drive, a mobile gaming device, or a watch.

## Patentansprüche

1. Verfahren (500) zur Steuerung von Uplink-Übertragungen einer Mehrzahl von Datenbursts in einem System mit orthogonalem Frequenzmultiplexzugriff, wobei das Verfahren umfasst:
Bestimmen (501) einer ersten Startzeit für mindestens einen Datenburst in der Mehrzahl von Datenbursts;
Zuweisen (510) für den mindestens einen Datenburst eines Zeitintervalls für die Übertragung des mindestens einen Datenbursts von einem ersten Sendeempfänger; und
Senden (520) mindestens einer Steuernachricht, die das zugewiesene Zeitintervall anzeigt;
**dadurch gekennzeichnet, dass** der Zuweisungsschritt umfasst:
Bestimmen (512), ob ein Sendezeitintervall, das zur ersten Startzeit beginnt, und ein Empfangszeitintervall zum Empfangen eines Downlink-Datenbursts einander am ersten Sendeempfänger überlappen;
wenn das Sendezeitintervall und das Empfangszeitintervall einander überlappen:
Bestimmen (516) einer zweiten Startzeit für den mindestens einen Datenburst auf der Basis der ersten Startzeit, wobei die zweite Startzeit später als die erste Startzeit ist, und wobei ein Sendezeitintervall, das zur zweiten Startzeit beginnt, und ein Empfangszeitintervall zum Empfangen eines Downlink-Datenbursts einander am ersten Sendeempfänger nicht überlappen; und
Zuweisen (518) des Zeitintervalls zum Starten zur zweiten Startzeit; und
wenn das Sendezeitintervall und das Empfangszeitintervall einander nicht überlappen:
Zuweisen (514) des Zeitintervalls zum Starten zur ersten Startzeit.

2. Verfahren (500) nach Anspruch 1, wobei der Schritt des Bestimmens (512), ob das Sendezeitintervall und das Empfangszeitintervall einander überlappen, ein Bestimmen dessen umfasst, ob der erste Sendeempfänger ein Halbduplex-Endgerät ist, das mit einem System mit Frequenzduplex- und orthogonalem Frequenzmultiplexzugriff konform ist.

3. Verfahren (500) nach Anspruch 1, wobei der Schritt des Bestimmens (512), ob das Sendezeitintervall und das Empfangszeitintervall einander überlappen, ein Bestimmen dessen umfasst, ob der erste Sendeempfänger mit einem System mit Zeitduplex- und orthogonalem Frequenzmultiplexzugriff konform ist.

4. Verfahren (500) nach einem der Ansprüche 1 bis 3, das durchgeführt wird, wenn sich der erste Sendeempfänger in einer ersten Zelle des Systems mit orthogonalem Frequenzmultiplexzugriff befindet, wobei der Schritt des Bestimmens (501) der ersten Startzeit ein Bestimmen der ersten Startzeit auf der Basis einer notwendigen Sicherheitsperiode an einer Basisstation der ersten Zelle umfasst.

5. Verfahren (500) nach einem der Ansprüche 1 bis 4, wobei der Schritt des Bestimmens (516) einer zweiten Startzeit ein Verzögern der ersten Startzeit umfasst.

6. Verfahren (500) nach Anspruch 5, das durchgeführt wird, wenn sich eine Mehrzahl von Sendeempfängern in einer ersten Zelle des Systems mit orthogonalem Frequenzmultiplexzugriff befindet, wobei die Mehrzahl von Sendeempfängern den ersten Sendeempfänger und mindestens einen zweiten Sendeempfänger umfasst, eine Umlaufzeitverzögerung des zweiten Sendeempfängers die größte Umlaufzeitverzögerung unter der Mehrzahl von Sendeempfängern ist, wobei der Schritt des Bestimmens (516) einer zweiten Startzeit ein Verzögern der ersten Startzeit auf der Basis von mindestens einem von Folgendem umfasst:
einer Umlaufzeitverzögerung des ersten Sendeempfängers;
der Umlaufzeitverzögerung des zweiten Sendeempfängers; und
einer ungünstigsten Umlaufzeitverzögerung, die mit der ersten Zelle assoziiert ist.

7. Verfahren (500) nach Anspruch 6, wobei der Schritt des Bestimmens (516) einer zweiten Startzeit ferner ein Verzögern der ersten Startzeit auf der Basis einer Schaltzeit zum Umschalten zwischen Empfang und Sendung am ersten Sendeempfänger umfasst.

8. Verfahren (500) nach einem der Ansprüche 5 bis 7, das durchgeführt wird, wenn sich eine Mehrzahl von Sendeempfängern in einer ersten Zelle des Systems mit orthogonalem Frequenzmultiplexzugriff befindet, wobei die Mehrzahl von Sendeempfängern mindestens den ersten Sendeempfänger umfasst, jeder Datenburst in der Mehrzahl von Datenbursts mit einem Sendeempfänger der Mehrzahl von Sendeempfängern assoziiert ist, und das Verfahren ferner umfasst:
Bestimmen (516) für jeden Datenburst einer jeweiligen Startzeit auf der Basis der zweiten Startzeit;
Zuweisen (518) eines jeweiligen Zeitintervalls, das zur jeweiligen Startzeit beginnt, für die Übertragung jedes Datenbursts; und
Senden (520) mindestens einer Steuernachricht, welche die zugewiesenen jeweiligen Zeitintervalle anzeigt.

9. Verfahren (500) nach Anspruch 8, wobei der Schritt des Bestimmens der jeweiligen Startzeiten ferner ein derartiges Bestimmen der jeweiligen Startzeiten umfasst, dass die Mehrzahl von Datenbursts, wenn während der zugewiesenen jeweiligen Zeitintervalle übertragen, zeitlich abgeglichen wird, wenn sie an einer Basisstation der ersten Zelle empfangen werden.

10. Verfahren (500) nach einem der Ansprüche 1 bis 4, wobei der mindestens eine Datenburst eine erste Länge aufweist, und wobei der Schritt des Bestimmens (516) der zweiten Startzeit ein Bestimmen einer zweiten Länge durch Verkürzen der ersten Länge umfasst, wobei das Verfahren ferner ein Senden eines Steuersignals umfasst, das den ersten Sendeempfänger anweist, den mindestens einen Datenburst zu verkürzen, um einen verkürzten Datenburst mit der zweiten Länge zu erzeugen.

11. Verfahren (500) nach Anspruch 10, wobei der Schritt des Zuweisens (518) eines Zeitintervalls, das zur zweiten Startzeit beginnt, ferner umfasst:
Bestimmen einer Endzeit für den mindestens einen Datenburst auf der Basis der ersten Startzeit und der ersten Länge; und
Zuweisen eines verkürzten Zeitintervalls, das zur zweiten Startzeit beginnt und zur Endzeit endet, für die Übertragung des verkürzten Datenbursts.

12. Verfahren (500) nach einem der Ansprüche 1 bis 4, wobei die erste Startzeit mit einem ersten Sendezeitintervall assoziiert ist, wobei der Schritt des Bestimmens (516) einer zweiten Startzeit ein Auswählen eines zweiten Sendezeitintervalls nach dem ersten Zeitintervall umfasst, und wobei der Schritt des Zuweisens (518) des Zeitintervalls, das zur zweiten Startzeit beginnt, ein Zuweisen des zweiten Sendezeitintervalls für die Übertragung des mindestens einen Datenbursts umfasst.

13. Verfahren (500) nach einem der Ansprüche 10 bis 12, das durchgeführt wird, wenn sich eine Mehrzahl von Sendeempfängern in einer ersten Zelle des Systems mit orthogonalem Frequenzmultiplexzugriff befindet, wobei die Mehrzahl von Sendeempfängern mindestens den ersten Sendeempfänger umfasst, jeder Datenburst in der Mehrzahl von Datenbursts mit einem Sendeempfänger der Mehrzahl von Sendeempfängern assoziiert ist, und das Verfahren ferner umfasst:
Bestimmen (516) für jeden Datenburst einer jeweiligen Startzeit auf der Basis der ersten Startzeit;
Zuweisen (518) eines jeweiligen Zeitintervalls, das zur jeweiligen Startzeit beginnt, für die Übertragung jedes Datenbursts; und
Senden (520) mindestens einer Steuernachricht, welche die zugewiesenen jeweiligen Zeitintervalle anzeigt.

14. Verfahren (500) nach Anspruch 13, wobei der Schritt des Bestimmens der jeweiligen Startzeiten ferner ein derartiges Bestimmen der jeweiligen Startzeiten umfasst, dass die Mehrzahl von Datenbursts, wenn während der zugewiesenen jeweiligen Zeitintervalle übertragen, zeitlich abgeglichen wird, wenn sie an einer Basisstation der ersten Zelle empfangen werden.

15. Verfahren (500) nach Anspruch 14, wobei der Schritt des Bestimmens (516) der jeweiligen Startzeiten ferner ein derartiges Bestimmen der jeweiligen Startzeiten umfasst, dass die Mehrzahl von Datenbursts, wenn während der zugewiesenen jeweiligen Zeitintervalle übertragen, mit einem Zeitintervall, das für die Downlink-Übertragung von der ersten Zelle disponiert wird, zeitlich abgeglichen wird, wenn sie an einer Basisstation der ersten Zelle empfangen werden.

16. Verfahren nach einem der Ansprüche 1 bis 15, ferner umfassend ein Durchführen des Verfahrens in Konformität mit dem Long Term Evolution-Standard des universellen Mobilfunk-Telekommunikationssystems.

17. Computerprogrammprodukt, umfassend ein computerlesbares Medium, das ein Computerprogramm darauf aufweist, das Programmanweisungen umfasst, wobei das Computerprogramm in eine Datenverarbeitungseinheit geladen werden kann und so ausgelegt ist, dass es die Datenverarbeitungseinheit veranlasst, das Verfahren nach einem der Ansprüche 1 bis 16 auszuführen, wenn das Computerprogramm durch die Datenverarbeitungseinheit ausgeführt wird.

18. Elektronische Vorrichtung (750) zur Steuerung von Uplink-Übertragungen einer Mehrzahl von Datenbursts in e i n e m S y s t e m mit orthogonalem Frequenzmultiplexzugriff, wobei die Vorrichtung umfasst:
eine Steuerung (751, 752), die ausgelegt ist zum:
Bestimmen einer ersten Startzeit für mindestens einen Datenburst in der Mehrzahl von Datenbursts;
Zuweisen für den mindestens einen Datenburst eines Zeitintervalls für die Übertragung des mindestens einen Datenbursts von einem ersten Sendeempfänger (710); und
einen Sender (753), der ausgelegt ist zum:
Senden mindestens einer Steuernachricht, welche das zugewiesene Zeitintervall anzeigt,
**dadurch gekennzeichnet, dass** die Steuerung ferner ausgelegt ist zum:
Bestimmen, ob ein Sendezeitintervall, das zur ersten Startzeit beginnt, und ein Empfangszeitintervall zum Empfangen eines Downlink-Datenbursts einander am ersten Sendeempfänger (710) überlappen; und
wenn das Sendezeitintervall und das Empfangszeitintervall einander überlappen:
Bestimmen einer zweiten Startzeit für den mindestens einen Datenburst auf der Basis der ersten Startzeit, wobei die zweite Startzeit später als die erste Startzeit ist, und wobei ein Sendezeitintervall, das zur zweiten Startzeit beginnt, und ein Empfangszeitintervall zum Empfangen eines Downlink-Datenbursts einander am ersten Sendeempfänger (710) nicht überlappen; und
Zuweisen des Zeitintervalls zum Starten zur zweiten Startzeit; und
wenn das Sendezeitintervall und das Empfangszeitintervall einander nicht überlappen:
Zuweisen eines Zeitintervalls zum Starten zur ersten Startzeit.

19. Elektronische Vorrichtung (750) nach Anspruch 18, wobei die Steuerung (751, 752) so ausgelegt ist, dass sie bestimmt, dass das Sendezeitintervall und das Empfangszeitintervall einander überlappen, wenn der erste Sendeempfänger ein Halbduplex-Endgerät ist, das mit einem System mit Frequenzduplex- und orthogonalem Frequenzmultiplexzugriff konform ist.

20. Elektronische Vorrichtung (750) nach Anspruch 18, wobei die Steuerung (751, 752) so ausgelegt ist, dass sie bestimmt, dass das Sendezeitintervall und das Empfangszeitintervall einander überlappen, wenn der erste Sendeempfänger mit einem System mit Zeitduplex- und orthogonalem Frequenzmultiplexzugriff konform ist.

21. Elektronische Vorrichtung (750) nach einem der Ansprüche 18 bis 20, wobei sich der erste Sendeempfänger (710) in einer ersten Zelle des Systems mit orthogonalem Frequenzmultiplexzugriff befindet, und die Steuerung (751, 752) so ausgelegt ist, dass sie die erste Startzeit auf der Basis einer notwendigen Sicherheitsperiode an einer Basisstation der ersten Zelle bestimmt.

22. Elektronische Vorrichtung (750) nach einem der Ansprüche 18 bis 21, wobei die Steuerung (751, 752) so ausgelegt ist, dass sie die zweite Startzeit für den mindestens einen Datenburst durch Verzögern der ersten Startzeit bestimmt.

23. Elektronische Vorrichtung (750) nach Anspruch 22, wobei sich eine Mehrzahl von Sendeempfängern in einer ersten Zelle des Systems mit orthogonalem Frequenzmultiplexzugriff befindet, die Mehrzahl von Sendeempfängern (710) den ersten Sendeempfänger (710) und mindestens einen zweiten Sendeempfänger umfasst, wobei eine Umlaufzeitverzögerung des zweiten Sendeempfängers die größte Umlaufzeitverzögerung unter der Mehrzahl von Sendeempfängern ist, und wobei die Steuerung (751, 752) so ausgelegt ist, dass sie die erste Startzeit auf der Basis von mindestens einem von Folgendem verzögert:
einer Umlaufzeitverzögerung des ersten Sendeempfängers (710);
der Umlaufzeitverzögerung des zweiten Sendeempfängers;
und
einer ungünstigsten Umlaufzeitverzögerung, die mit der ersten Zelle assoziiert ist.

24. Elektronische Vorrichtung (750) nach Anspruch 23, wobei die Steuerung (751, 752) ferner so ausgelegt ist, dass sie die erste Startzeit auf der Basis einer Schaltzeit zum Umschalten zwischen Empfang und Sendung am ersten Sendeempfänger (710) verzögert.

25. Elektronische Vorrichtung (750) nach einem der Ansprüche 22 bis 24, wobei der Sender (753) so ausgelegt ist, dass er ein Steuersignal sendet, das dem ersten Sendeempfänger (710) die Zeitverzögerung anzeigt.

26. Elektronische Vorrichtung (750) nach einem der Ansprüche 22 bis 25, wobei sich eine Mehrzahl von Sendeempfängern (710) in einer ersten Zelle des Systems mit orthogonalem Frequenzmultiplexzugriff befindet, wobei die Mehrzahl von Sendeempfängern (710) mindestens den ersten Sendeempfänger (710) umfasst, und wobei die Steuerung (751, 752) ferner ausgelegt ist zum:
Bestimmen für jeden Datenburst einer jeweiligen Startzeit auf der Basis der zweiten Startzeit;
und
Zuweisen eines jeweiligen Zeitintervalls, das zur jeweiligen Startzeit beginnt, für die Übertragung jedes Datenbursts,
und wobei der Sender (753) ferner ausgelegt ist zum:
Senden mindestens einer Steuernachricht, welche die zugewiesenen jeweiligen Zeitintervalle anzeigt.

27. Elektronische Vorrichtung (750) nach Anspruch 26, wobei die Steuerung (751, 752) so ausgelegt ist, dass sie die jeweiligen Startzeiten derart bestimmt, dass die Mehrzahl von Datenbursts, wenn während der zugewiesenen jeweiligen Zeitintervalle übertragen, zeitlich abgeglichen wird, wenn sie an einer Basisstation der ersten Zelle empfangen werden.

28. Elektronische Vorrichtung (750) nach einem der Ansprüche 18 bis 21, wobei der mindestens eine Datenburst eine erste Länge aufweist, und wobei der Sender (753) so ausgelegt ist, dass er ein Steuersignal sendet, das den ersten Sendeempfänger (710) anweist, den mindestens einen Datenburst zu verkürzen, um einen verkürzten Datenburst mit einer zweiten Länge zu erzeugen.

29. Elektronische Vorrichtung (750) nach Anspruch 28, wobei die Steuerung (751, 752) ferner ausgelegt ist zum:
Bestimmen einer Endzeit für den mindestens einen Datenburst auf der Basis der ersten Startzeit und der ersten Länge; und
Zuweisen eines verkürzten Zeitintervalls, das zur zweiten Startzeit beginnt und zur Endzeit endet, für die Übertragung des verkürzten Datenbursts.

30. Elektronische Vorrichtung (750) nach einem der Ansprüche 18 bis 21, wobei die erste Startzeit mit einem ersten Sendezeitintervall assoziiert ist, und wobei die Steuerung (751, 752) ausgelegt ist zum:
Auswählen eines zweiten Sendezeitintervalls nach dem ersten Zeitintervall; und
Zuweisen des zweiten Sendezeitintervalls für die Übertragung des mindestens einen Datenbursts.

31. Elektronische Vorrichtung (750) nach einem der Ansprüche 28 bis 30, wobei sich eine Mehrzahl von Sendeempfängern (710) in einer ersten Zelle des Systems mit orthogonalem Frequenzmultiplexzugriff befindet, wobei die Mehrzahl von Sendeempfängern (710) mindestens den ersten Sendeempfänger (710) umfasst, und wobei die Steuerung (751, 752) ferner ausgelegt ist zum:
Bestimmen für jeden Datenburst einer jeweiligen Startzeit auf der Basis der ersten Startzeit; und
Zuweisen eines jeweiligen Zeitintervalls, das zur jeweiligen Startzeit beginnt, für die Übertragung jedes Datenbursts,
und wobei der Sender (753) ferner ausgelegt ist zum:
Senden mindestens einer Steuernachricht, welche die zugewiesenen jeweiligen Zeitintervalle anzeigt.

32. Elektronische Vorrichtung (750) nach Anspruch 31, wobei die Steuerung (751, 752) so ausgelegt ist, dass sie die jeweiligen Startzeiten derart bestimmt, dass die Mehrzahl von Datenbursts, wenn während der zugewiesenen jeweiligen Zeitintervalle übertragen, zeitlich abgeglichen wird, wenn sie an einer Basisstation der ersten Zelle empfangen werden.

33. Elektronische Vorrichtung (750) nach Anspruch 32, wobei die Steuerung (751) so ausgelegt ist, dass sie die jeweiligen Startzeiten derart bestimmt, dass die Mehrzahl von Datenbursts, wenn während der zugewiesenen jeweiligen Zeitintervalle übertragen, mit einem Zeitintervall, das für die Downlink-Übertragung von der ersten Zelle disponiert wird, zeitlich abgeglichen wird, wenn sie an einer Basisstation der ersten Zelle empfangen werden.

34. Elektronische Vorrichtung (750) nach einem der Ansprüche 18 bis 33, wobei die Vorrichtung mit dem Long Term Evolution-Standard des universellen Mobilfunk-Telekommunikationssystems konform ist.

35. Elektronische Vorrichtung (750) nach einem der Ansprüche 18 bis 34, wobei die elektronische Vorrichtung eine Basisstation oder eine Basisstationssteuerung ist.

36. Sendeempfänger (710) in einem System mit orthogonalem Frequenzmultiplexzugriff, umfassend:
einen Sender (720), der so ausgelegt ist, dass er einen Datenburst sendet, wobei der Datenburst eine erste Länge aufweist;
einen Empfänger (730), der so ausgelegt ist, dass er ein Zeitverzögerungssteuersignal empfängt; und
eine Steuerung (740), die so ausgelegt ist, dass sie die Übertragung des Datenbursts so verzögert, wie durch das Zeitverzögerungssteuersignal angezeigt;
**dadurch gekennzeichnet, dass** der Sendeempfänger eine Schaltungsanordnung (732, 740, 722) umfasst, die so ausgelegt ist, dass sie einen verkürzten Datenburst mit einer zweiten Länge auf der Basis des empfangenen Zeitverzögerungssteuersignals erzeugt, wenn das Sendezeitintervall und das Empfangszeitintervalls einander überlappen;
der Sender (720) so ausgelegt ist, dass er den verkürzten Datenburst sendet; und
die Steuerung (740) so ausgelegt, dass sie die Übertragung des verkürzten Datenbursts um die Differenz zwischen den ersten und zweiten Längen verkürzt;
wobei das Zeitverzögerungssteuersignal basiert auf dem:
Bestimmen einer ersten Startzeit für den Datenburst,
Bestimmen, ob ein Sendezeitintervall, das zur ersten Startzeit beginnt, und ein Empfangszeitintervall zum Empfangen eines Downlink-Datenbursts einander am ersten Sendeempfänger (710) überlappen; und
wenn das Sendezeitintervall und das Empfangszeitintervall einander überlappen:
Bestimmen einer zweiten Startzeit für den mindestens einen Datenburst auf der Basis der ersten Startzeit, wobei die zweite Startzeit später als die erste Startzeit ist, und wobei ein Sendezeitintervall, das zur zweiten Startzeit beginnt, und ein Empfangszeitintervall zum Empfangen eines Downlink-Datenbursts einander am Sendeempfänger (710) nicht überlappen; und
Zuweisen des Zeitintervalls zum Starten zur zweiten Startzeit; und
wenn das Sendezeitintervall und das Empfangszeitintervall einander nicht überlappen:
Zuweisen des Zeitintervalls zum Starten zur ersten Startzeit.

37. Elektronische Vorrichtung (700), umfassend mindestens einen Sendeempfänger nach Anspruch 36.

38. Elektronische Vorrichtung (700) nach Anspruch 37, wobei die Vorrichtung den Long Term Evolution-Standard des universellen Mobilfunk-Telekommunikationssystems erfüllt.

39. Elektronische Vorrichtung (700) nach einem der Ansprüche 37 bis 38, wobei die elektronische Vorrichtung eine tragbare oder in der Hand gehaltene Mobilfunkkommunikationseinrichtung, ein Mobilfunkendgerät, ein Mobiltelefon, ein Pager, eine Kommunikator, ein elektronischer Organizer, ein Smartphone, ein Computer, ein eingebettetes Laufwerk, eine mobiles Spielgerät oder eine Uhr ist.

## Revendications

1. Procédé (500) de commande de transmissionsen liaison montante d'une pluralité de rafales de données dans un système d'accès multiple par répartition orthogonale de fréquence, le procédé comprenant de :
déterminer (501) un premier temps de démarrage d'au moins une rafale de données dans la pluralité de rafales de données ;
allouer (510), pour au moins une rafale de données, un intervalle de temps pour la transmission d'au moins une rafale de données depuis un premier émetteur-récepteur ; et
transmettre (520) au moins un message de commande indiquant l'intervalle de temps alloué ;
**caractérisé en ce que** l'étape d'allocation comprend de :
déterminer (512) si un intervalle de temps de transmission démarrant au premier temps de démarrage et un intervalle de temps de réception pour recevoir une rafale de données en liaison descendante se superposent au niveau du premier émetteur-récepteur ;
si l'intervalle de temps de transmission et l'intervalle de temps de réception se superposent :
déterminer (516) un second temps de démarrage pour au moins une rafale de données sur la base du premier temps de démarrage, dans lequel le second temps de démarrage est plus tard que le premier temps de démarrage et dans lequel un intervalle de temps de transmission démarrant au second temps de démarrage et un intervalle de temps de réception pour recevoir une rafale de données en liaison descendante ne se superposent pas au niveau du premier émetteur-récepteur ; et
allouer (518) l'intervalle de temps pour démarrer au second temps de démarrage ; et
si l'intervalle de temps de transmission et l'intervalle de temps de réception ne se superposent pas :
allouer (514) l'intervalle de temps pour démarrer au premier temps de démarrage.

2. Procédé (500) selon la revendication 1, dans lequel l'étape de détermination (512) de ce que l'intervalle de temps de transmission et l'intervalle de temps de réception se superposent comprend de déterminer si le premier émetteur-récepteur est un terminal semi-duplex en conformité avec un système d'accès multiple par répartition orthogonale de fréquence à duplex par répartition en fréquence.

3. Procédé (500) selon la revendication 1, dans lequel l'étape de détermination (512) de ce que l'intervalle de temps de transmission et l'intervalle de temps de réception se superposent comprend de déterminer si le premier émetteur-récepteur est en conformité avec un système d'accès multiple par répartition orthogonale de fréquence à duplex par répartition dans le temps.

4. Procédé (500) selon une quelconque des revendications 1 à 3, effectué quand le premier émetteur-récepteur réside dans une première cellule du système d'accès multiple par répartition orthogonale de fréquence, dans lequel l'étape de détermination (501) du premier temps de démarrage comprend de déterminer le premier temps de démarrage sur la base d'une période de réserve nécessaire au niveau d'une station de base de la première cellule.

5. Procédé (500) selon une quelconque des revendications 1 à 4, dans lequel l'étape de détermination (516) d'un second temps de démarrage comprend de retarder le premier temps de démarrage.

6. Procédé (500) selon la revendication 5, effectué quand une pluralité d'émetteurs-récepteurs résident dans une première cellule du système d'accès multiple par répartition orthogonale de fréquence, la pluralité d'émetteurs-récepteurs comprenant le premier émetteur-récepteur et au moins un second émetteur-récepteur, un temps de propagation aller-retour du second émetteur-récepteur étant le plus grand temps de propagation aller-retour parmi la pluralité d'émetteurs-récepteurs, dans lequel l'étape de détermination (516) d'un second temps de démarrage comprend de retarder le premier temps de démarrage sur la base d'au moins un de :
un temps de propagation aller-retour du premier émetteur-récepteur ;
le temps de propagation aller-retour du second émetteur-récepteur ; et
un temps de propagation aller-retour au pire cas associé à la première cellule.

7. Procédé (500) selon la revendication 6, dans lequel l'étape de détermination (516) d'un second temps de démarrage comprend en outre de retarder le premier temps de démarrage sur la base d'un temps de commutation pour commuter entre la réception et la transmission au niveau du premier émetteur-récepteur.

8. Procédé (500) selon une quelconque des revendications 5 à 7, effectué, quand une pluralité d'émetteurs-récepteurs résident dans une premièrecellule du système d'accès multiple par répartition orthogonale de fréquence, la pluralité d'émetteurs-récepteurs comprenant au moins le premier émetteur-récepteur, chaque rafale de données dans la pluralité de rafales de données étant associée à un émetteur-récepteur de la pluralité d'émetteurs-récepteurs, le procédé comprenant en outre de :
déterminer (516), pour chaque rafale de données, un temps de démarrage respectif basé sur le second temps de démarrage ;
allouer (518) un intervalle de temps respectif, démarrant au temps de démarrage respectif pour la transmission de chaque rafale de données ; et
transmettre (520) au moins un message de commande indiquant les intervalles de temps respectifs alloués.

9. Procédé (500) selon la revendication 8, dans lequel l'étape de détermination des temps de démarrage respectifs comprend en outre de déterminer les temps de démarrage respectifs de sorte que la pluralité de rafales de données, quand elles sont transmises pendant les intervalles de temps respectifs alloués, seront alignées dans le temps auquel elles sont reçues au niveau d'une station de base de la premièrecellule.

10. Procédé (500) selon une quelconque des revendications 1 à 4, dans lequel au moins une rafale de données a une première longueur et dans lequel l'étape de détermination (516) du second temps de démarrage comprend de déterminer une seconde longueur en raccourcissant la première longueur, le procédé comprenant en outre d'envoyer un signal de commande enjoignant au premier émetteur-récepteur de raccourcir au moins une rafale de données pour produire une rafale de données raccourcie ayant la seconde longueur.

11. Procédé (500) selon la revendication 10, dans lequel l'étape d'allocation (518) d'un intervalle de temps démarrant au second temps de démarrage comprend en outre de :
déterminer un temps de fin pour au moins une rafale de données sur la base du premier temps de démarrage et de la première longueur ; et
allouer un intervalle de temps raccourci, démarrant au second temps de démarrage et finissant au temps de fin, à des fins de transmission de la rafale de données raccourcie.

12. Procédé (500) selon une quelconque des revendications 1 à 4, dans lequel le premier temps de démarrage est associé à un premier intervalle de temps de transmission, dans lequel l'étape de détermination (516) du second temps de démarrage comprend de sélectionner un second intervalle de temps de transmission subséquent au premier intervalle de temps, et dans lequel l'étape d'allocation (518) de l'intervalle de temps démarrant au second temps de démarrage comprend d'allouer la second intervalle de temps de transmission à des fins de transmission d'au moins une rafale de données.

13. Procédé (500) selon une quelconque des revendications 10 à 12, effectué quand une pluralité d'émetteurs-récepteurs résident dans une première cellule du système d'accès multiple par répartition orthogonale de fréquence, la pluralité d'émetteurs-récepteurs comprenant au moins le premier émetteur-récepteur, chaque rafale de données dans la pluralité de rafales de données étant associée à un émetteur-récepteur de la pluralité d'émetteurs-récepteurs, le procédé comprenant en outre de :
déterminer (516), pour chaque rafale de données, un temps de démarrage respectif basé sur le premier temps de démarrage ;
allouer (518) un intervalle de temps respectif, démarrant au temps de démarrage respectif, pour la transmission de chaque rafale de données ; et
transmettre (520) au moins un message de commande indiquant les intervalles de temps respectifs alloués.

14. Procédé (500) selon la revendication 13, dans lequel l'étape de détermination des temps de démarrage respectifs comprend en outre de déterminer les temps de démarrage respectifs de sorte que la pluralité de rafales de données, quand elles sont transmises pendant les intervalles de temps respectifs alloués, seront alignées selon le temps auquel elles sont reçues au niveau d'une station de base de la première cellule.

15. Procédé (500) selon la revendication 14, dans lequel l'étape de détermination (516) des temps de démarrage respectifs comprend en outre de déterminer les temps de démarrage respectifs de sorte que la pluralité de rafales de données, quand elles sont transmises pendant les intervalles de temps respectifs alloués, quand elles sont reçues au niveau d'une station de base de la première cellule, seront alignées dans le temps avec un intervalle de temps programmé pour une transmission en liaison descendante depuis la première cellule.

16. Procédé selon une quelconque des revendications 1 à 15, comprenant en outre d'effectuer le procédé en conformité avec la norme d'Evolution à Long Terme du Système de télécommunications mobiles universel.

17. Produit de programme informatique comprenant un support lisible par ordinateur, comportant un programme informatique comprenant des instructions de programme, le programme informatique étant chargeable dans une unité de traitement de données et adapté pour amener l'unité de traitement de données à exécuter le procédé selon une quelconque des revendications 1 à 16 quand le programme informatique est exécuté par l'unité de traitement de données.

18. Appareil électronique (750) pour commander des transmissions en liaison montante d'une pluralité de rafales de données dans un système d'accès multiple par répartition orthogonale de fréquence, l'appareil comprenant :
un contrôleur (751,752) adapté pour :
déterminer un premier temps de démarrage pour au moins une rafale de données dans la pluralité de rafales de données ; et
allouer, pour au moins une rafale de données, un intervalle de temps pour la transmission d'au moins une rafale de données depuis un premier émetteur-récepteur (710) ; et
un émetteur (753) adapté pour :
transmettre au moins un message de commande indiquant l'intervalle de temps alloué,
**caractérisé en ce que** le contrôleur est en outre adapté pour :
déterminer si un intervalle de temps de transmission démarrant au premier temps de démarrage et un intervalle de temps de réception pour recevoir une rafale de données en liaison descendante se superposent au niveau du premier émetteur-récepteur (710) ; et
si l'intervalle de temps de transmission et l'intervalle de temps de réception se superposent :
déterminer un second temps de démarrage pour au moins une rafale de données sur la base du premier temps de démarrage, dans lequel le second temps de démarrage est plus tard que le premier temps de démarrage et dans lequel un intervalle de temps de transmission démarrant au second temps de démarrage et un intervalle de temps de réception pour recevoir une rafale de données en liaison descendante ne se superposent pas au niveau du premier émetteur-récepteur (710) ; et
allouer l'intervalle de temps pour démarrer au second temps de démarrage ; et
si l'intervalle de temps de transmission et l'intervalle de temps de réception ne se superposent pas :
allouer un intervalle de temps pour démarrer au premier temps de démarrage.

19. Appareil électronique (750) selon la revendication 18, dans lequel le contrôleur (751,752) est adapté pour déterminer que l'intervalle de temps de transmission et l'intervalle de temps de réception se superposent si le premier émetteur-récepteur est un terminal semi-duplex en conformité avec un système d'accès multiple par répartition orthogonale de fréquence à duplex par répartition en fréquence.

20. Appareil électronique (750) selon la revendication 18, dans lequel le contrôleur (751,752) est adapté pour déterminer que l'intervalle de temps de transmission et l'intervalle de temps de réception se superposent si le premier émetteur-récepteur est en conformité avec un système d'accès multiple par répartition orthogonale de fréquence à duplex par répartition dans le temps.

21. Appareil électronique (750) selon une quelconque des revendications 18 à 20, dans lequel le premier émetteur-récepteur (710) réside dans une première cellule du système d'accès multiple par répartition orthogonale de fréquence, et dans lequel le contrôleur (751,752) est adapté pour déterminer le premier temps de démarrage sur la base d'une période de réserve nécessaire au niveau d'une station de base de la première cellule.

22. Appareil électronique (750) selon une quelconque des revendications 18 à 21, dans lequel le contrôleur (751,752) est adapté pour déterminer le second temps de démarrage pour au moins une rafale de données en retardant le premier temps de démarrage.

23. Appareil électronique (750) selon la revendication 22, dans lequel une pluralité d'émetteurs-récepteurs résident dans une première cellule du système d'accès multiple par répartition orthogonale de fréquence, la pluralité d'émetteurs-récepteurs (710) comprenant le premier émetteur-récepteur (710) et au moins un second émetteur-récepteur, dans lequel un temps de propagation aller-retour du second émetteur-récepteur est le plus grand temps de propagation aller-retour parmi la pluralité d'émetteurs-récepteurs, et dans lequel le contrôleur (751,752) est adapté pour retarder le premier temps de démarrage sur la base d'au moins un de :
un temps de propagation aller-retour du premier émetteur-récepteur (710);
le temps de propagation aller-retour du second émetteur-récepteur ; et
un temps de propagation aller-retour au pire cas associé à la première cellule.

24. Appareil électronique (750) selon la revendication 23, dans lequel le contrôleur (751,752) est en outre adapté pour retarder le premier temps de démarrage sur la base d'un temps de commutation pour commuter entre la réception et la transmission au niveau du premier émetteur-récepteur (710).

25. Appareil électronique (750) selon une quelconque des revendications 22 à 24, dans lequel l'émetteur (753) est adapté pour envoyer un signal de commande indiquant le retard de synchronisation au premier émetteur-récepteur (710).

26. Appareil électronique (750) selon une quelconque des revendications 22 à 25, dans lequel une pluralité d'émetteurs-récepteurs (710) résident dans une premièrecellule du système d'accès multiple par répartition orthogonale de la fréquence, la pluralité d'émetteurs-récepteurs (710) comprenant au moins le premier émetteur-récepteur (710), et dans lequel le contrôleur (751,752) est en outre adapté afin de :
déterminer, pour chaque rafale de données, un temps de démarrage respectif basé sur le second temps de démarrage ; et
allouer un intervalle de temps respectif,
démarrant au temps de démarrage respectif, pour la transmission de chaque rafale de données,
et dans lequel l'émetteur (753) est en outre adapté afin de :
transmettre au moins un message de commande indiquant les intervalles de temps respectifs alloués.

27. Appareil électronique (750) selon la revendication 26, dans lequel le contrôleur (751,752) est adapté pour déterminer les temps de démarrage respectifs de sorte que la pluralité de rafales de données, quand elles sont transmises pendant les intervalles de temps respectifs alloués, seront alignées selon le temps auquel elles seront reçuesau niveau d'une station de base de la première cellule.

28. Appareil électronique (750) selon une quelconque des revendications 18 à 21, dans lequel au moins une rafale de données a une première longueur, et dans lequel l'émetteur (753) est adapté pour envoyer un signal de commande enjoignant au premier émetteur-récepteur (710) de raccourcir au moins une rafale de données pour produire une rafale de données raccourcie ayant une seconde longueur.

29. Appareil électronique (750) selon la revendication 28, dans lequel le contrôleur (751,752) est en outre adapté afin de :
déterminer un temps de fin pour au moins une rafale de données sur la base du premier temps de démarrage et de la première longueur ; et
allouer un intervalle de temps raccourci, démarrant au second temps de démarrage et finissant au temps de fin, pour la transmission de la rafale de données raccourcie.

30. Appareil électronique (750) selon une quelconque des revendications 18 à 21, dans lequel le premier temps de démarrage est associé à un premier intervalle de temps de transmission, et dans lequel le contrôleur (751,752) est adapté afin de :
sélectionner un second intervalle de temps de transmission subséquent au premier intervalle de temps ; et
allouer le second intervalle de temps de transmission pour la transmission d'au moins une rafale de données.

31. Appareil électronique (750) selon une quelconque des revendications 28 à 30, dans lequel une pluralité d'émetteurs-récepteurs (710) résident dans une première cellule du système d'accès multiple à répartition orthogonale de fréquence, la pluralité d'émetteurs-récepteurs (710) comprenant au moins le premier émetteur-récepteur (710), dans lequel le contrôleur (751,752) est en outre adapté afin de :
déterminer, pour chaque rafale de données, un temps de démarrage respectif basé sur le premier temps de démarrage ; et
allouer un intervalle de temps respectif, démarrant au temps de démarrage respectif, pour la transmission de chaque rafale de données,
et dans lequel l'émetteur (753) est en outre adapté afin de :
transmettre au moins un message de commande indiquant les intervalles de temps respectifs alloués.

32. Appareil électronique (750) selon la revendication 31, dans lequel le contrôleur (751,752) est adapté pour déterminer les temps de démarrage respectifs de sorte que la pluralité de rafales de données, quand elles sont transmises pendant les intervalles de temps respectifs alloués, seront alignées selon le temps auquel elles sont reçues au niveau d'une station de base de la première cellule.

33. Appareil électronique (750) selon la revendication 32, dans lequel le contrôleur (751,752) est adapté afin de déterminer les temps de démarrage respectifs de sorte que la pluralité de rafales de données, quand elles sont transmises pendant les intervalles de temps respectifs alloués, quand elles sont reçues au niveau d'une station de base de la première cellule, seront alignées dans le temps avec un intervalle de temps programmé pour une transmission en liaison descendante depuis la première cellule.

34. Appareil électronique (750) selon une quelconque des revendications 18 à 33, dans lequel l'appareil est en conformité avec la norme d'Evolution à Long Terme du Système de télécommunications mobiles universel.

35. Appareil électronique (750) selon une quelconque des revendications 18 à 34, dans lequel l'appareil électronique est une station de base, ou un contrôleur de station de base.

36. Emetteur-récepteur (710) dans un système d'accès multiple par répartition orthogonale de fréquence comprenant :
un émetteur (720) adapté pour transmettre une rafale de données, dans lequel la rafale de données a une première longueur ;
un récepteur (730) adapté pour recevoir un signal de commande de retard de synchronisation ; et
un contrôleur (740) adapté pour retarder la transmission de la rafale de données comme indiqué par le signal de commande de retard de synchronisation ;
**caractérisé en ce que** l'émetteur-récepteur comprend :
des circuits (732,740,722) adaptés pour produire une rafale de données raccourcie ayant une seconde longueur sur la base du signal de commande de retard de synchronisation reçu quand l'intervalle de temps de transmission et l'intervalle de temps de réception se superposent ;
l'émetteur (720) étant adapté pour transmettre la rafale de données raccourcie ; et
le contrôleur (740) étant adapté pour retarder la transmission de la rafale de données raccourcie par la différence entre la première et la seconde longueur ;
dans lequel le signal de commande de retard de synchronisation est basé sur:
déterminer un premier temps de démarrage pour la rafale de données,
déterminer si un intervalle de temps de transmission démarrant au premier temps de démarrage et un intervalle de temps de réception pour recevoir une rafale de données en liaison descendante se superposent au niveau de l'émetteur-récepteur (710) ;
si l'intervalle de temps de transmission et l'intervalle de temps de réception se superposent :
déterminer un second temps de démarrage pour au moins une rafale de données sur la base du premier temps de démarrage, dans lequel le second temps de démarrage est plus tard que le premier temps de démarrage et dans lequel un intervalle de temps de transmission démarrant au second temps de démarrage et un intervalle de temps de réception pour recevoir une rafale de données en liaison descendante ne se superposent pas au niveau de l'émetteur-récepteur (710) ; et
allouer l'intervalle de temps pour démarrer au second intervalle de temps ; et si l'intervalle de temps de transmission et l'intervalle de temps de réception ne se superposent pas :
allouer l'intervalle de temps pour démarrer au premier temps de démarrage.

37. Appareil électronique (700) comprenant au moins un émetteur-récepteur selon la revendication 36.

38. Appareil électronique (700) selon la revendication 37, dans lequel l'appareil est en conformité avec la norme d'Evolution à Long Terme du Système de télécommunications mobiles universel.

39. Appareil électronique (700) selon une quelconque des revendications 37 à 38, dans lequel l'appareil électronique est un équipement de communication radio mobile portatif, un terminal radio mobile, un téléphone mobile, un pageur, un dispositif de communicateur, un organiseur électronique, un Smartphone, un ordinateur, un pilote intégré, un dispositif de jeu mobile ou une montre.
